# EUROPEAN PATENT SPECIFICATION

(11) **EP 2 892 279 B1**
(45) Date of publication and mention of the grant of the patent: **10.04.2019**
(21) Application number: 13844694.3
(22) Date of filing: 27.09.2013
(51) Int. Cl.: H04W 36/14, H04W 36/30

(54) **NETWORK SWITCHING METHOD AND DEVICE**
NETZWERKSCHALTVERFAHREN UND -VORRICHTUNG
PROCÉDÉ ET DISPOSITIF DE CHANGEMENT DE RÉSEAU

(30) Priority: 12.10.2012 CN 201210387269
(43) Date of publication of application: 08.07.2015
(73) Proprietor: Huawei Device (Dongguan) Co., Ltd., Dongguan, Guangdong 523808 (CN)
(72) Inventor: GAO, Linyi, Shenzhen Guangdong 518129 (CN); XUE, Guodong, Shenzhen Guangdong 518129 (CN); JIN, Hui, Shenzhen Guangdong 518129 (CN); YI, Qiang, Shenzhen Guangdong 518129 (CN)
(74) Representative: Goddar, Heinz J.
(86) International application number: PCT/CN2013/084410
(87) International publication number: WO 2014/056403

(56) References cited:
- EP-A1- 1 819 184
- EP-A2- 1 463 361
- WO-A1-2011/119862
- CN-A- 101 778 491
- CN-A- 101 815 334
- CN-C- 1 224 292
- US-A1- 2005 107 082
- HARALD BENDER ET AL: "Evolution of SIM provisioning towards a flexible MCIM provisioning in M2M vertical industries", INTELLIGENCE IN NEXT GENERATION NETWORKS (ICIN), 2012 16TH INTERNATIONAL CONFERENCE ON, IEEE, 8 October 2012 (2012-10-08), pages 57-64, XP032277560, DOI: 10.1109/ICIN.2012.6376034 ISBN: 978-1-4673-1527-2

## Description

### TECHNICAL FIELD

Embodiments of the present invention relates to the field of communications technologies, and in particular, to a network handover method and an apparatus.

### BACKGROUND

Generally, a universal integrated circuit card (Universal Integrated Circuit Card, UICC) of a user equipment includes only related information about a home network operator of the user equipment. Once the user equipment cannot access the home network of the user equipment due to an impact of a natural disaster such as a hurricane or due to another reason, even if a network of another operator exists, because the user equipment cannot be handed over to the network of another operator, and the user equipment cannot continue to use the home network of the user equipment for communication, the communication is interrupted. EP 1 463 361 A2 discloses a method for connecting a mobile phone to a preferred communication system among a plurality of communication systems with different radio frequency bands. When determining that a mobile phone is out of a range of a system A, the device is connected to a system B. After the connection to the system B continues for a predetermined period, the system determines whether the device is in the service range of the system A. If yes, the devices can connect to the system A.

EP 1 819 184 A1 discloses a method or apparatus for automatically selecting a wireless communication network by user equipment using a steered PLMN. A homenetwork identification, a list of priorisized roaming network identification, and a steered network identification are stored in a memory of the user equipment. In an automatic network selection procedure a scanning operation is performed to receive one or more of the network identificaitons.

WO 2011/119862 A1 discloses a technique for enabling a user equipment to return to a wireless network after failure to obtain a particular service.

US 2005/107082 A1 discloses a network selection method and an apparauts with home network prioritization in country border regions. A mobile station is associated with a home communication network. Being outside the home network, the mobile station selects and operates with a non-home communication network. After examination of a timer, the mobile station scans to identify a plurality of networks in the coverage area within which the mobile station is operating.

Harald Bender et al.: Evolution of SIM provisioning towards a flexible MCIM provisioning in M2M vertical industries", INTELLIGENCE IN NEXT GENERATION NETWORKS (ICIN); 2012 16TH INTERNATIONAL CONFERENCE ON, IEEE, 8 October 2012, pages 57-64, disclosed concepts and processes for machine-to-machine-communication to identify modules.

### SUMMARY

The present invention is defined by the network handover method of claims 1, 4 and 9 as well as by the apparatuses of claims 11 and 14, so that when a user equipment cannot access a home network of the user equipment, the user equipment can be automatically handed over to another network, and when the home network is restored, the user equipment can be automatically handed over from the another network back to the home network, thereby avoiding a problem of communication interruption.

According to a first aspect, an embodiment of the present invention provides a network handover method, including:
after a terminal is handed over from a home network to a redundant network, receiving, by the terminal, a value of a periodic network detection timer that is sent by a handover module, where the value of the periodic network detection timer is determined by a subscription management device by acquiring a restoration time of the home network through a home network operator of the terminal and determining the value of the periodic network detection timer according to the restoration time, or the value of the periodic network detection timer is determined by the subscription management device by acquiring a handover time through a service provider of the terminal and determining the value of the periodic network detection timer according to the network handover time and sent to the handover module;
periodically detecting, by the terminal, signal strength of the home network of the terminal according to the value of the periodic network detection timer;
if it is detected that the signal strength of the home network of the terminal is restored, sending a home network restoration report to the handover module, so that the handover module disables s an operational profile of the redundant network and enables an operational profile of the home network of the terminal; and
accessing, by the terminal, the home network.

Based on the first aspect, in a first possible implementation manner, after the accessing, by the terminal, the home network, the method further includes:
sending, by the terminal to the handover module, a handover-to-home-network success message, so that the handover module sends the handover-to-home-network success message to the subscription management device.

Based on the first aspect, in a second possible implementation manner, before the terminal is handed over from the home network to the redundant network, the method includes: when the terminal cannot access the home network, obtaining, by the terminal by means of detection, a signal of at least one of other networks; and
sending, by the terminal, an identifier of the detected another network to the handover module, so that on a basis of determining that a locally preset identifier of the redundant network is the same as the identifier of the another network, the handover module disable the operational profile of the home network, enables the operational profile of the redundant network of the terminal, and sends a handover-to-redundant-network request message to the terminal, where the handover-to-redundant-network request message includes information needed for accessing the redundant network; and
that the terminal accesses the redundant network specifically includes: accessing the redundant network according to the information needed for accessing the redundant network.

According to a second aspect, an embodiment of the present invention provides a network handover method, including:
after a terminal is handed over from a home network to a redundant network, receiving, by the terminal, a handover-to-home-network request message sent by a handover module, where the handover-to-home-network request message is sent by the subscription management device to the handover module, and the handover-to-home-network request message includes information about the home network and/or a handover reason; and
if the terminal accesses the home network, sending a handover-to-home-network success message to the handover module, so that the handover module sends the handover-to-home-network success message to the subscription management device.

Based on the second aspect, in a first possible implementation manner, before the terminal is handed over from the home network to the redundant network, the method includes: when the terminal cannot access the home network, obtaining, by the terminal by means of detection, a signal of at least one of other networks; and
sending, by the terminal, an identifier of the detected another network to the handover module, so that on a basis of determining that a locally preset identifier of the redundant network is the same as the identifier of the another network, the handover module disables the operational profile of the home network, enables the operational profile of the redundant network of the terminal, and sends a handover-to-redundant-network request message to the terminal, where the handover-to-redundant-network request message includes information needed for accessing the redundant network; and
that the terminal is handed over from the home network to the redundant network specifically includes: accessing the redundant network according to the information needed for accessing the redundant network.

According to a third aspect, an embodiment of the present invention provides a network handover method, including:
after a terminal is handed over from a home network to a redundant network, sending, by a handover module, a value of a periodic network detection timer to the terminal, where the value of the periodic network detection timer is determined by a subscription management device by acquiring a restoration time of the home network through a home network operator of the terminal and determining the value of the periodic network detection timer according to the restoration time, or the value of the periodic network detection timer is determined by the subscription management device by acquiring a handover time through a service provider of the terminal and determining the value of the periodic network detection timer according to the network handover time and sent to the handover module, so that the terminal periodically detects signal strength of the home network of the terminal according to the value of the periodic network detection timer;
receiving, by the handover module, a home network restoration report sent by the terminal; and
deactivating, by the handover module, an operational profile of the redundant network, and activating an operational profile of the home network of the terminal, so that the terminal accesses the home network.

Based on the third aspect, in a first possible implementation manner, after the deactivating, by the handover module, an operational profile of the redundant network, and activating an operational profile of the home network of the terminal, the method includes: sending, by the handover module, a handover-to-home-network success message to the subscription management device.

Based on the third aspect, in a second possible implementation manner, before the terminal is handed over from the home network to the redundant network, the method includes:
receiving, by the handover module, an identifier of another network sent by the terminal, where the another network is a network corresponding to a signal of another network detected when the terminal cannot access the home network;
determining, by the handover module, that a locally preset identifier of a redundant network is the same as the identifier of the another network;
deactivating, by the handover module, the operational profile of the home network of the terminal, and activating the operational profile of the redundant network; and
sending, by the handover module, a handover-to-redundant-network request message to the terminal, where the handover-to-redundant-network request message includes information needed for accessing the redundant network, so that the terminal accesses the redundant network according to the information needed for accessing the redundant network.

Based on the second possible implementation manner of the third aspect, in a third possible implementation manner, after the sending, by the handover module, a handover-to-redundant-network request message to the terminal, where the handover-to-redundant-network request message includes information needed for accessing the redundant network, the method includes:
sending, by the handover module, a network handover event report to the subscription management device, where the network handover event report includes an identifier of the redundant network, an identifier of the terminal, and a handover reason, so that the subscription management device determines the value of the periodic network detection timer by acquiring a restoration time of the home network through a home network operator of the terminal and determining the value of the periodic network detection timer according to the restoration time, or the subscription management device determines the value of the periodic network detection timer by acquiring a handover time through a service provider of the terminal and determining the value of the periodic network detection timer according to the network handover time, and sends the determined value of the periodic network detection timer to the handover module; and
the handover module includes an embedded universal integrated circuit card.

According to a fourth aspect, an embodiment of the present invention provides a network handover method, including:
after a terminal is handed over from a home network to a redundant network, receiving, by a handover module, a handover-to-home-network request message sent by the subscription management device;
deactivating, by the handover module, an operational profile of the redundant network, and activating an operational profile of the home network of the terminal;
sending, by the handover module, the handover-to-home-network request message to the terminal, where the handover-to-home-network request message includes information about the home network and/or a handover reason; and
if the handover module receives a handover-to-home-network success message sent by the terminal, sending, by the handover module, the handover-to-home-network success message to the subscription management device.

Based on the fourth aspect, in a first possible implementation manner, before the terminal is handed over from the home network to the redundant network, the method includes: receiving, by the handover module, an identifier of another network sent by the terminal,
where the another network is a network corresponding to a signal of another network detected when the terminal cannot access the home network;
determining, by the handover module, that a locally preset identifier of a redundant network is the same as the identifier of the another network;
deactivating, by the handover module, the operational profile of the home network of the terminal, and activating the operational profile of the redundant network; and
sending, by the handover module, a handover-to-redundant-network request message to the terminal, where the handover-to-redundant-network request message includes information needed for accessing the redundant network, so that the terminal accesses the redundant network according to the information needed for accessing the redundant network.
the handover module includes an embedded universal integrated circuit card.

According to a fifth aspect, an embodiment of the present invention provides a network handover method, including:
after a terminal is handed over from a home network to a redundant network, determining, by a subscription management device, a value of a periodic network detection timer by acquiring a restoration time of the home network through a home network operator of the terminal and determining the value of the periodic network detection timer according to the restoration time, or determining, by the subscription management device, the value of the periodic network detection timer by acquiring a handover time through a service provider of the terminal and determining the value of the periodic network detection timer according to the network handover time; and
sending, by the subscription management device, the determined value of the periodic network detection timer to the handover module, so that the handover module sends the determined value of the periodic network detection timer to the terminal, and the terminal periodically detects signal strength of the home network of the terminal, and on a basis of detecting that the signal strength of the home network of the terminal is restored, sends a home network restoration report to the handover module, and accesses the home network.

Based on a fifth aspect, in a first possible implementation manner, before the determining, by a subscription management device, a value of a periodic network detection timer according to a policy, the method includes:
receiving, by the subscription management device, a network handover event report sent by the handover module, where the network handover event report includes an identifier of the redundant network, an identifier of the terminal, and a handover reason, and the network handover event report is a network handover event report sent by the handover module to the subscription management device, where when the terminal cannot access the home network, the terminal sends an identifier of another network whose signal is detected to the handover module, so that on a basis of determining that a locally preset identifier of the redundant network is the same as the identifier of the another network, and on a basis of accessing the redundant network by the terminal after a handover-to-redundant-network request message is sent to the terminal, the handover module sends the network handover event report to the subscription management device.

According to a sixth aspect, an embodiment of the present invention provides a network handover method, including:
after a terminal is handed over from a home network to a redundant network, receiving, by a subscription management device, a mobile reachability timer timeout report of the terminal, the home network restoration report, or an information change report of the home network that is sent by a home network operator of the terminal; and
sending, by the subscription management device, the handover-to-home-network request message to the handover module, so that the handover module sends the handover-to-home-network request message to the terminal, where the handover-to-home-network request message includes information about the home network and a handover reason.

Based on the sixth aspect, in a first possible implementation manner, before the sending, by the subscription management device, the handover-to-home-network request message to the handover module, the method includes:
if it is determined that the subscription management device has received a network handover event report sent by the handover module, determining that the terminal is normal; and
if it is determined that the subscription management device has not received the network handover event report sent by the handover module, determining that the terminal is abnormal, and sending, to the home network operator or a service provider of the terminal, a message indicating that the terminal is abnormal.

Based on the sixth aspect, in a second possible implementation manner, after the determining that the terminal is normal, the sending, by the subscription management device, the handover-to-home-network request message to the handover module specifically includes: starting, by the subscription management device, a preset network restoration timer; and after the network restoration timer expires, starting, by the subscription management device, a preset network handover timer, and sending the handover-to-home-network request message to the handover module.

Based on the second possible implementation manner of the sixth aspect, in a third possible implementation manner, after the starting, by the subscription management device, a preset network handover timer, and sending the handover-to-home-network request message to the handover module, the method includes:
after the network handover timer expires, if it is determined that the subscription management device receives a message that is sent by the handover module and indicates that a handover to the home network is successful, stopping the network handover timer.

Based on the third possible implementation manner of the sixth aspect, in a fourth possible implementation manner, after the network handover timer expires, the method includes: if it is determined that the subscription management device has not received the message that is sent by the handover module and indicates that a handover to the home network is successful, and it is determined that a preset counter has not reached a maximum value, restarting, by the subscription management device, the preset network restoration timer; and after the network restoration timer expires, restarting, by the subscription management device, the preset network handover timer, sending the handover-to-home-network request message to the handover module, and increasing a value of the counter by 1; and
if it is determined that the subscription management device has not received, before the preset counter reaches the maximum value, the message that is sent by the handover module and indicates that a handover to the home network is successful, sending a handover-to-home-network failure message to the home network operator or the service provider of the terminal.

According to a seventh aspect, an embodiment of the present invention provides a terminal, including:
a receiving module, configured to, after a terminal is handed over from a home network to a redundant network, receive a value of a periodic network detection timer that is sent by a handover module, where the value of the periodic network detection timer is determined by a subscription management device according to a policy and sent to the handover module, or the value of the periodic network detection timer is preset by the handover module;
a detecting module, configured to periodically detect signal strength of the home network of the terminal according to the value of the periodic network detection timer received by the receiving module;
a sending module, configured to, on a basis of detecting, by the detecting module, that the signal strength of the home network of the terminal is restored, send a home network restoration report to the handover module, so that the handover module disables an operational profile of the redundant network and enables an operational profile of the home network of the terminal; and
an accessing module, configured to access the home network after the sending module sends the home network restoration report to the handover module.

According to an eighth aspect, an embodiment of the present invention provides a terminal, including:
a receiving module, configured to receive a handover-to-home-network request message sent by a handover module, where the handover-to-home-network request message is sent by the subscription management device to the handover module, and the handover-to-home-network request message includes information about the home network and/or a handover reason; and
a sending module, configured to send, on a basis of accessing the home network by the accessing module according to the information about the home network, a handover-to-home-network success message to the handover module, so that the handover module sends the handover-to-home-network success message to the subscription management device.

According to a ninth aspect, an embodiment of the present invention provides a handover module, including:
a sending unit, configured to send a value of a periodic network detection timer to a terminal after the terminal is handed over from a home network to a redundant network, where the value of the periodic network detection timer is determined by a subscription management device according to a policy and sent to the handover module, or the value of the periodic network detection timer is preset by the handover module, so that the terminal periodically detects signal strength of the home network of the terminal according to the value of the periodic network detection timer;
a receiving unit, configured to receive a home network restoration report sent by the terminal; and
an activating unit, configured to, according to the home network restoration report received by the receiving unit, disable an operational profile of the redundant network and enable an operational profile of the home network of the terminal, so that the terminal accesses the home network.

According to a tenth aspect, an embodiment of the present invention provides a handover module, including:
a receiving unit, configured to receive a handover-to-home-network request message sent by the subscription management device;
an activating unit, configured to disable an operational profile of the redundant network, and enable an operational profile of a home network of the terminal; and
a sending unit, configured to send the handover-to-home-network request message to the terminal, where the handover-to-home-network request message includes information about the home network and/or a handover reason, where
the sending unit is further configured to send, if the receiving unit receives a handover-to-home-network success message sent by the terminal, the handover-to-home-network success message to the subscription management device.

According to an eleventh aspect, an embodiment of the present invention provides a subscription management device, including:
a first determining module, configured to, after a terminal is handed over from a home network to a redundant network, determine a value of a periodic network detection timer by acquiring a restoration time of the home network through a home network operator of the terminal and determining the value of the periodic network detection timer according to the restoration time, or determine the value of the periodic network detection timer by acquiring a handover time through a service provider of the terminal and determining the value of the periodic network detection timer according to the network handover time; and
a sending module, configured to send the determined value of the periodic network detection timer to the handover module according to the value of the periodic network detection timer determined by the first determining module, so that the handover module sends the determined value of the periodic network detection timer to the terminal, and the terminal periodically detects signal strength of the home network of the terminal, and on a basis of detecting that the signal strength of the home network of the terminal is restored, sends a home network restoration report to the handover module, and accesses the home network.

According to a twelfth aspect, an embodiment of the present invention provides a subscription management device, including:
a receiving module, configured to, after a terminal is handed over from a home network to a redundant network, receive a mobile reachability timer timeout report of the terminal, the home network restoration report, or an information change report of the home network that is sent by a home network operator of the terminal; and
a sending module, configured to send the handover-to-home-network request message to the handover module, so that the handover module sends the handover-to-home-network request message to the terminal, where the handover-to-home-network request message includes information about the home network and a handover reason.

In embodiments of the present invention, a terminal can periodically detect signal strength of a home network of the terminal according to a value of a periodic network detection timer that is sent by a handover module, and send a home network restoration report to the handover module when it is detected that the signal strength of the home network of the terminal is restored, so that according to the home network restoration report, the handover module disables an operational profile of a redundant network and enables an operational profile of the home network of the terminal. In this way, when the signal strength of the home network of the terminal is restored, the terminal can be hand over from the redundant network to the home network, continuity of a service is ensured, and experience of a user is improved. In addition, the terminal can periodically detect the signal strength of the home network of the terminal according to a determined value of the periodic network detection timer, where the value of the periodic network detection timer may be determined by the subscription management device according to a policy, and the periodic network detection timer is started only after a redundant network handover event occurs. Therefore, it can be avoided that the terminal always detects the signal strength of the home network, so as to avoid a waste of power of the terminal.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a network handover method according to an embodiment of the present invention;
FIG. 2 is a schematic flowchart of a network handover method according to another embodiment of the present invention;
FIG. 3 is a schematic flowchart of a network handover method according to still another embodiment of the present invention;
FIG. 4 is a schematic flowchart of a network handover method according to yet another embodiment of the present invention;
FIG. 5 is a schematic flowchart of a network handover method according to yet another embodiment of the present invention;
FIG. 6 is a schematic flowchart of a network handover method according to yet another embodiment of the present invention;
FIG. 7 is a signaling diagram of a network handover method according to yet another embodiment of the present invention;
FIG. 8 is a signaling diagram of a network handover method according to yet another embodiment of the present invention;
FIG. 9 is a schematic structural diagram of a terminal according to yet another embodiment of the present invention;
FIG. 10 is a schematic structural diagram of a handover module according to yet another embodiment of the present invention; and
FIG. 11 is a schematic structural diagram of a subscription management device according to yet another embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

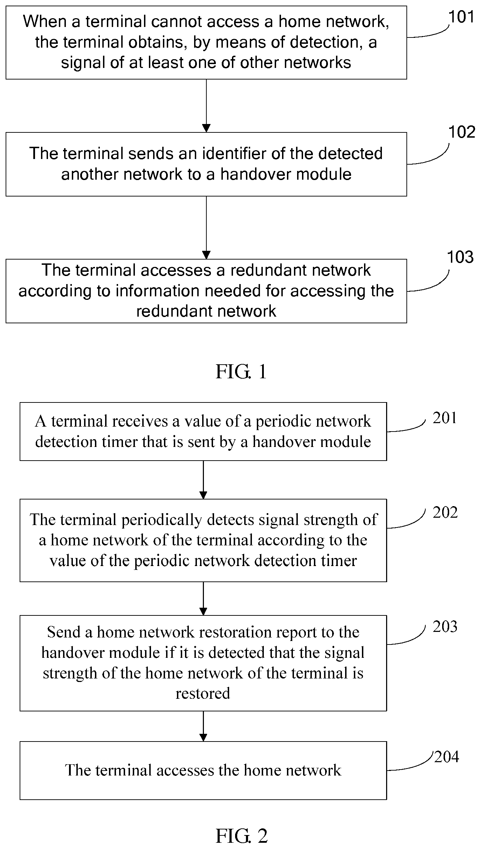

FIG. 1 is a schematic flowchart of a network handover method according to an embodiment of the present invention. As shown in FIG. 1, the network handover method in this embodiment may include:
101. When a terminal cannot access a home network, the terminal obtains, by means of detection, a signal of at least one of other networks.
   When the terminal cannot access the home network due to a reason, for example, cannot access the home network due to an impact of a natural disaster such as a hurricane or another reason, the terminal may detect whether a signal of another network exists. It is assumed that when the terminal may detect a signal of at least one of other networks, an identifier of the another network is acquired, for example, a public land mobile network (Public Land Mobile Network, PLMN) identifier of the another network is acquired.
102. The terminal sends an identifier of the detected another network to a handover module.

If the terminal obtains, by means of detection, a signal of another network, an identifier of the another network is sent to the handover module. If the terminal obtains, by means of detection, signals of multiple other networks, identifiers corresponding to the signals of multiple other networks are sent to the handover module.

In an implementation manner of the present invention, the handover module generally includes but is not limited to an embedded universal integrated circuit card (embedded Universal Integrated Circuit Card, eUICC). Generally, the eUICC may be embedded in the terminal.

It is assumed that at least one piece of redundant network information is preset in the handover module. Certainly, multiple pieces of redundant network information may also be preset, for example, a preset redundant network information list, where multiple pieces of redundant network information are stored in the preset redundant network information list. It should be noted that a redundant network refers to another network except the home network of the terminal.

Correspondingly, the handover module determines, according to at least one piece of locally preset redundant network information, that a locally preset identifier of a redundant network is the same as the identifier of the another network, or the handover module determines, according to the locally preset redundant network information list, that an identifier of one redundant network in the redundant network information list is the same as the identifier of the another network. The handover module sends a handover-to-redundant-network request message to the terminal, where the handover-to-redundant-network request message includes information needed for accessing the redundant network.

It is assumed that an operational profile of the redundant network is stored in the handover module, and the handover module disables an operational profile of the home network of the terminal and enables the operational profile of the redundant network.
103. The terminal accesses a redundant network according to information needed for accessing the redundant network.

The information needed for accessing the redundant network includes, for example, information such as an authentication parameter, an encryption parameter, or a PLMN identifier of the redundant network.

When the terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is not caused, continuity of a service is ensured, and experience of a user is improved.

FIG. 2 is a schematic flowchart of a network handover method according to another embodiment of the present invention. After the terminal accesses the redundant network according to the information needed for accessing the redundant network, if the home network of the terminal is restored, a specific implementation process, initiated by the terminal, of a handover from the redundant network to the home network is shown in FIG. 2. The network handover method in this embodiment may includes the following steps:
201. The terminal receives a value of a periodic network detection timer that is sent by the handover module.

The value of the periodic network detection timer may be a value of a periodic network detection timer determined by a subscription management device according to policy information and sent to the handover module.

In an implementation manner of the present invention, after the terminal is successfully handed over to the redundant network, the handover module sends a network handover event report to the subscription management device, where the network handover event report includes an identifier of the redundant network, an identifier of the terminal, and a handover reason, so that the subscription management device determines the value of the periodic network detection timer according to the policy information. In specific implementation:

The subscription management device acquires a restoration time of the home network through a home network operator of the terminal, and the subscription management device may determine the value of the periodic network detection timer according to the restoration time of the home network and sends the determined value of the periodic network detection timer to the handover module.

Alternatively, the subscription management device acquires a network handover time through a service provider of the terminal, and the subscription management device may determine the value of the periodic network detection timer according to the network handover time and sends the determined value of the periodic network detection timer to the handover module.

It should be noted that when the subscription management device cannot determine the value of the periodic network detection timer according to the policy, the handover module cannot acquire the value of the periodic network detection timer determined by the subscription management device. The handover module may use a value of the periodic network detection timer that is preset by the handover module and send the preset value of the periodic network detection timer to the terminal.
202. The terminal periodically detects signal strength of the home network of the terminal according to the value of the periodic network detection timer.
   It should be noted that, in this embodiment, the terminal may periodically detect the signal strength of the home network of the terminal according to the determined value of the periodic network detection timer, the value of the periodic network detection timer may be determined by the subscription management device according to the policy information, and the periodic network detection timer is started only after a redundant network handover event occurs. Therefore, it can be avoided that the terminal always detects the signal strength of the home network, so as to avoid a waste of power of the terminal.
203. Send a home network restoration report to the handover module if it is detected that the signal strength of the home network of the terminal is restored.
   Correspondingly, the handover module disables the operational profile of the redundant network and enables the operational profile of the home network of the terminal according to the home network restoration report.
204. The terminal accesses the home network.

Optionally, after accessing the home network, the terminal may send, to the handover module, a handover-to-home-network success message.

The terminal in this embodiment of the present invention can periodically detect signal strength of a home network of the terminal according to a value of a periodic network detection timer that is sent by a handover module, and send a home network restoration report to the handover module when it is detected that the signal strength of the home network of the terminal is restored, so that according to the home network restoration report, the handover module disables an operational profile of the redundant network and enables an operational profile of the home network of the terminal. In this way, when the signal strength of the home network of the terminal is restored, the terminal can be handed over from the redundant network to the home network, thereby ensuring continuity of a service and improving experience of a user.

In addition, the terminal can periodically detect the signal strength of the home network of the terminal according to a determined value of the periodic network detection timer, where the value of the periodic network detection timer may be determined by a subscription management device according to policy information, and the periodic network detection timer is started only after a redundant network handover event occurs. Therefore, it can be avoided that the terminal always detects the signal strength of the home network, so as to avoid a waste of power of the terminal.

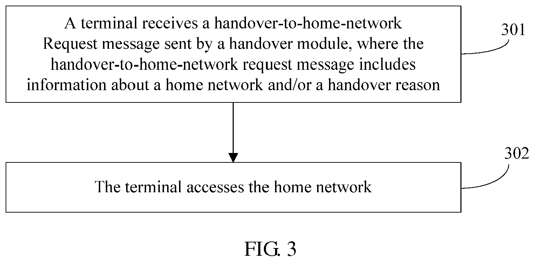

FIG. 3 is a schematic flowchart of a network handover method according to still another embodiment of the present invention. After the terminal accesses the redundant network according to the information needed for accessing the redundant network, if the home network of the terminal is restored, a specific implementation process, initiated by a network side, of a handover from the redundant network to the home network is shown in FIG. 3. The network handover method in this embodiment may includes the following steps:
301. The terminal receives a handover-to-home-network request message sent by the handover module, where the handover-to-home-network request message includes information about the home network and/or a handover reason.

In an implementation manner of the present invention, it is assumed that the subscription management device receives a mobile reachability timer timeout report of the terminal, the home network restoration report, or an information change report of the home network that is sent by the home network operator of the terminal, where the information about the home network includes, for example, parameter information of the home network, and a case in which the subscription management device further receives the network handover event report sent by the handover module and the subscription management device may determine that the terminal is normal is assumed;
the subscription management device may start a preset network restoration timer, and after the network restoration timer expires, the subscription management device may further start a preset network handover timer and send the handover-to-home-network request message to the handover module, so that the handover module sends the handover-to-home-network request message to the terminal.

The foregoing handover-to-home-network request message includes the information about the home network and/or the handover reason. For example, when the information about the home network of the terminal changes, which causes that the terminal cannot access the network, to enable the terminal to be capable of accessing the home network again, the handover-to-home-network request message includes changed information about the home network.
302. The terminal accesses the home network.

In an implementation manner of the present invention, after receiving the handover-to-home-network request message, the terminal is handed over from the redundant network to the home network according to the information about the home network. Optionally, the terminal sends, to the subscription management device by using the handover module, a handover-to-home-network success message, that is, notifies the subscription management device that the terminal has been handed over from the redundant network back to the home network, so that the subscription management device may stop the network handover timer.

It should be noted that when the terminal cannot be handed over from the redundant network to the home network after receiving the handover-to-home-network request message, optionally, the terminal may send, to the subscription management device by using the handover module, a handover-to-home-network failure message, that is, notify the subscription management device that the terminal cannot be handed over from the redundant network back to the home network, so that the subscription management device sends a handover-to-home network failure report to the home network operator or the service provider of the terminal. Optionally, the handover-to-home-network failure message may also not be sent to the subscription management device.

In this embodiment of the present invention, there is no need to periodically detect signal strength of a home network of a terminal, instead, the terminal is handed over from a redundant network to the home network according to a handover-to-home-network request message sent by a handover module. It can be avoided that the terminal always detects the signal strength of the home network, so as to avoid a waste of power of the terminal.

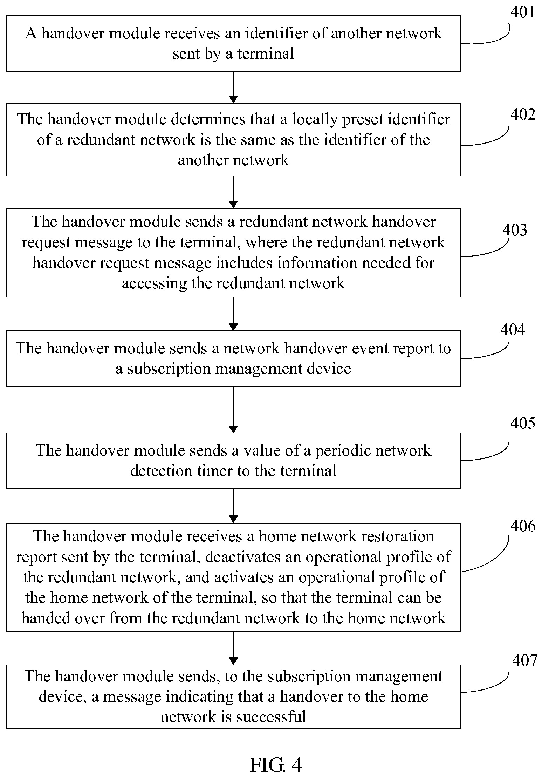

FIG. 4 is a schematic flowchart of a network handover method according to yet another embodiment of the present invention. As shown in FIG. 4, the network handover method in this embodiment may include the following steps:
401. A handover module receives an identifier of another network sent by a terminal.
   The another network is a network corresponding to a signal of at least one of other networks detected when the terminal cannot access a home network. The identifier of the another network includes but is not limited to a PLMN identifier of the another network.
402. The handover module determines that a locally preset identifier of a redundant network is the same as the identifier of the another network.

In an implementation manner of the present invention, the handover module generally includes but is not limited to an embedded universal integrated circuit card eUICC. Generally, the eUICC may be embedded in the terminal.

It is assumed that at least one piece of redundant network information is preset in the handover module. Certainly, multiple pieces of redundant network information may also be preset, for example, a preset redundant network information list, where multiple pieces of redundant network information are stored in the preset redundant network information list. It should be noted that a redundant network refers to another network except the home network of the terminal.

The handover module determines, according to at least one piece of locally preset redundant network information, that a locally preset identifier of a redundant network is the same as the identifier of the another network, or the handover module determines, according to the locally preset redundant network information list, that an identifier of one redundant network in the redundant network information list is the same as the identifier of the another network.

In an implementation manner of the present invention, after the handover module determines that the locally preset identifier of a redundant network is the same as the identifier of the another network, the method includes:
deactivating, by the handover module, an operational profile of the home network of the terminal, and activating an operational profile of the redundant network.
403. The handover module sends a handover-to-redundant-network request message to the terminal, where the handover-to-redundant-network request message includes information needed for accessing the redundant network.

Correspondingly, the terminal accesses the redundant network according to the information needed for accessing the redundant network.

In an implementation manner of the present invention, after the handover module sends the handover-to-redundant-network request message to the terminal, and after the terminal successfully accesses the redundant network, the method includes:
404. The handover module sends a network handover event report to a subscription management device.

The network handover event report includes an identifier of the redundant network, an identifier of the terminal, and a handover reason, so that the subscription management device determines a value of a periodic network detection timer according to a policy. In specific implementation:

For example, the subscription management device may acquire a restoration time of the home network through a home network operator of the terminal, and the subscription management device may determine the value of the periodic network detection timer according to the restoration time of the home network and sends the determined value of the periodic network detection timer to the handover module.

For another example, the subscription management device may acquire a network handover time through a service provider of the terminal, and the subscription management device may determine the value of the periodic network detection timer according to the network handover time and sends the determined value of the periodic network detection timer to the handover module.

It should be noted that when the subscription management device cannot determine the value of the periodic network detection timer according to the policy, the handover module cannot acquire the value of the periodic network detection timer determined by the subscription management device. The handover module may use a value of the periodic network detection timer that is preset by the handover module.
405. The handover module sends a value of the periodic network detection timer to the terminal.

The value of the periodic network detection timer may be the value of the periodic network detection timer determined by the subscription management device according to the policy or the value of the periodic network detection timer that is preset by the handover module.

Correspondingly, the terminal may periodically detect signal strength of the home network of the terminal according to the determined value of the periodic network detection timer or the value of the periodic network detection timer that is preset by the handover module.

The terminal sends a home network restoration report to the handover module when it is detected that the signal strength of the home network of the terminal is restored.
406. The handover module receives a home network restoration report sent by the terminal, disables an operational profile of the redundant network, and enables an operational profile of the home network of the terminal, so that the terminal can be handed over from the redundant network to the home network.
407. The handover module sends a handover-to-home-network success message to the subscription management device.

Generally, after the terminal is handed over from the redundant network to the home network, the handover module may further send the handover-to-home-network success message to the subscription management device, that is, send to the subscription management device, a message indicating that the terminal is handed over from the redundant network to the home network.

In another implementation manner of the present invention, a case in which the subscription management device receives a mobile reachability timer timeout report of the terminal, the home network restoration report, or an information change report of the home network that is sent by the home network operator of the terminal and further receives the network handover event report sent by the handover module, and the subscription management device may determine that the terminal is normal is assumed;
the subscription management device may start a preset network restoration timer, and after the network restoration timer expires, the subscription management device may further start a preset network handover timer and send a handover-to-home-network request message to the handover module, so that the handover module sends the handover-to-home-network request message to the terminal.

The foregoing handover-to-home-network request message includes information about the home network and/or a handover reason. For example, when the information about the home network of the terminal changes, which causes that the terminal cannot access the network, to enable the terminal to be capable of accessing the home network again, the handover-to-home-network request message includes changed information about the home network.

Correspondingly, after receiving the handover-to-home-network request message, the terminal is successfully handed over from the redundant network to the home network according to the information about the home network. The handover module may send a handover-to-home-network success message to the subscription management device, that is, notify the subscription management device that the terminal has been handed over from the redundant network back to the home network, so that the subscription management device may stop the network handover timer.

It should be noted that when the terminal cannot be handed over from the redundant network to the home network after receiving the handover-to-home-network request message, optionally, the handover module may send a handover-to-home-network failure message to the subscription management device, that is, notify the subscription management device that the terminal cannot be handed over from the redundant network back to the home network, so that the subscription management device sends a handover-to-home network failure report to the home network operator or the service provider of the terminal. Optionally, the handover module may not send the handover-to-home-network failure message to the subscription management device.

When the terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is not caused, continuity of a service is ensured, and experience of a user is improved.

Further, in this embodiment of the present invention, the handover module sends a value of a periodic network detection timer determined by the subscription management device to the terminal, or sends a value of the periodic network detection timer that is preset by the handover module to the terminal, so that the terminal periodically detects signal strength of the home network of the terminal, when it is detected that the signal strength of the home network of the terminal is restored, a home network restoration report is sent to the handover module, and according to the home network restoration report, the handover module disables an operational profile of the redundant network and enables an operational profile of the home network of the terminal. In this way, when the signal strength of the home network of the terminal is restored, the terminal can be handed over from the redundant network to the home network, which improves experience of a user. The value of the periodic network detection timer determined by the subscription management device is determined according to policy information, and the periodic network detection timer is started only after a redundant network handover event occurs. Therefore, it can be avoided that the terminal always detects the signal strength of the home network, so as to avoid a waste of power of the terminal.

Further, in this embodiment of the present invention, there may be no need for the terminal to periodically detect the signal strength of the home network of the terminal, instead, the terminal is handed over from the redundant network to the home network according to a handover-to-home-network request message sent by the handover module. It can be avoided that the terminal always detects the signal strength of the home network, so as to avoid a waste of power of the terminal.

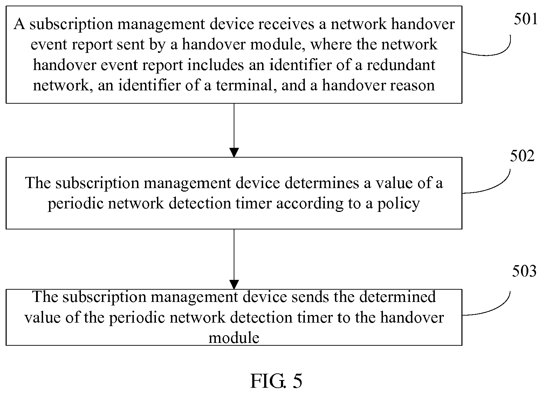

FIG. 5 is a schematic flowchart of a network handover method according to yet another embodiment of the present invention. When a home network is restored, an implementation process, initiated by a terminal, of a handover from a redundant network to the home network is shown in FIG. 5, and the network handover method in this embodiment may include the following steps:
501. A subscription management device receives a network handover event report sent by a handover module, where the network handover event report includes an identifier of the redundant network, an identifier of the terminal, and a handover reason.
   The network handover event report is a network handover event report sent by the handover module to the subscription management device, where when the terminal cannot access the home network, the terminal sends an identifier of another network whose signal is detected to the handover module, and on a basis of determining that a locally preset identifier of the redundant network is the same as the identifier of the another network, the handover module sends a handover-to-redundant-network request message to the terminal, and after the terminal is successfully handed over from the home network to the redundant network, the handover module sends the network handover event report to the subscription management device.
502. The subscription management device determines a value of a periodic network detection timer according to a policy.

In specific implementation, for example, the subscription management device may acquire a restoration time of the home network through a home network operator of the terminal, and the subscription management device may determine the value of the periodic network detection timer according to the restoration time of the home network and sends the determined value of the periodic network detection timer to the handover module.

For another example, the subscription management device may acquire a network handover time through a service provider of the terminal, and the subscription management device may determine the value of the periodic network detection timer according to the network handover time and sends the determined value of the periodic network detection timer to the handover module.

In an implementation manner of the present invention, the subscription management device determines the value of the periodic network detection timer according to the policy. In specific implementation, generally, if a relatively long time is required for network restoration, the value of the periodic network detection timer that is provided by the home network operator is a little larger. However, the service provider hopes that the handover module can handover the terminal to the home network as soon as possible; therefore, the value of the periodic network detection timer that is provided by the service provider is a little smaller. For example, the policy may be that the subscription management device preferentially use the value of the periodic network detection timer that is provided by the home network operator, or preferentially use the value of the periodic network detection timer that is provided by the service provider. For another example, the policy may be that a largest value among values of the periodic network detection timer is preferentially used, or that a smallest value among the values of the periodic network detection timer is preferentially used.
503. The subscription management device sends the determined value of the periodic network detection timer to the handover module.

Correspondingly, the handover module sends the determined value of the periodic network detection timer to the terminal; the terminal periodically detects signal strength of the home network of the terminal, and on a basis of detecting that the signal strength of the home network of the terminal is restored, sends a home network restoration report to the handover module; and according to the home network restoration report, the handover module disable an operational profile of the redundant network and enables an operational profile of the home network of the terminal, so that the terminal can be handed over from the redundant network to the home network.

In this embodiment of the present invention, a subscription management device determines a value of a periodic network detection timer according to policy information, and sends the determined value of the periodic network detection timer to a terminal by using a handover module, so that the terminal periodically detects signal strength of a home network of the terminal, and sends a home network restoration report to the handover module when it is detected that the signal strength of the home network of the terminal is restored, so that according to the home network restoration report, the handover module disables an operational profile of a redundant network and enables an operational profile of the home network of the terminal. In this way, when the signal strength of the home network of the terminal is restored, the terminal can be handed over from the redundant network to the home network, which improves experience of a user. The value of the periodic network detection timer may be determined according to the policy information, and the periodic network detection timer is started only after a redundant network handover event occurs. Therefore, it can be avoided that the terminal always detects the signal strength of the home network, so as to avoid a waste of power of the terminal.

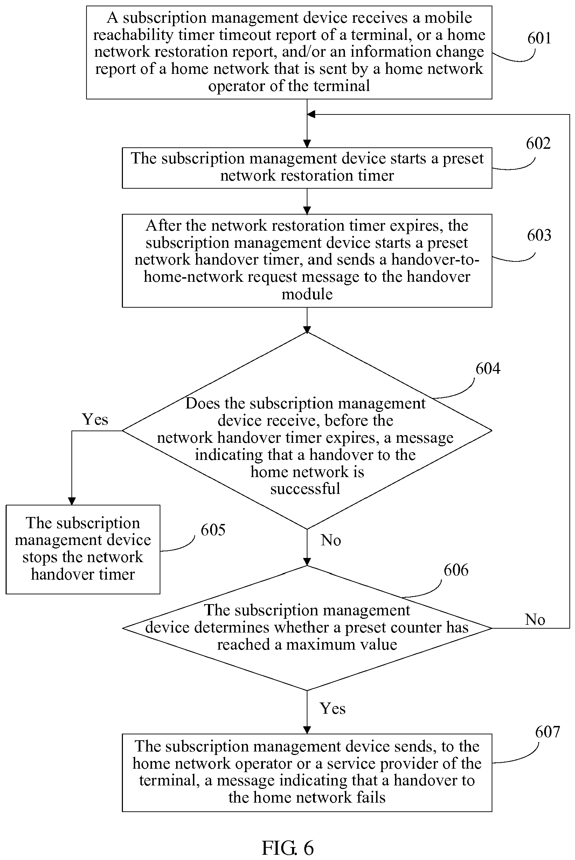

FIG. 6 is a schematic flowchart of a network handover method according to yet another embodiment of the present invention. When a home network is restored, an implementation process, initiated by a network side, of a handover from a redundant network to the home network is shown in FIG. 6, and the network handover method in this embodiment may include the following steps:
601. A subscription management device receives a mobile reachability timer timeout report of the terminal, or a home network restoration report, and/or an information change report of the home network that is sent by a home network operator of the terminal.

For example, when a network corresponding to the home network operator of the terminal determines that a mobile reachability timer of the terminal expires, the mobile reachability timer timeout report of the terminal may be sent to the subscription management device, where the timeout report carries an identifier of the terminal, and the identifier of the terminal, for example, includes but is not limited to an integrated circuit card identity (Integrated circuit card identity, ICCID), an international mobile subscriber identity (International Mobile Subscriber Identity, IMSI), or an international mobile equipment identity (International Mobile Equipment Identity, IMEI) of the terminal.

For another example, after the network corresponding to the home network operator of the terminal restorations an damaged network, a network restoration report may be sent to the subscription management device, where the network restoration report carries the identifier of the terminal.

For still another example, when a parameter of the network corresponding to the home network operator of the terminal changes, network information corresponding to the home network operator may also be sent to the subscription management device, for example, the network information corresponding to the home network operator includes a changed network parameter, and may further include the identifier of the terminal.

In an implementation manner of the present invention, if the subscription management device has not received, by using the handover module, a report related to a network handover event of the terminal, the subscription management device sends, to the home network operator of the terminal, a terminal abnormality notification; or the subscription management device sends, to a service provider (Service Provider, SP) of the terminal at the same time, the terminal abnormality notification, where the terminal abnormality notification carries the identifier of the terminal and a reason for abnormality.
602. The subscription management device starts a preset network restoration timer.
   In another implementation manner of the present invention, if the subscription management device has received, by using the handover module, the report related to a network handover event of the terminal, it is determined that the terminal is normal, and the subscription management device starts the preset network restoration timer, where a value of the network restoration timer depends on a self-restoration capability of a network, for example, a home network restoration capability or a congestion control capability.
603. After the network restoration timer expires, the subscription management device starts a preset network handover timer, and sends a handover-to-home-network request message to the handover module.

It should be noted that the foregoing handover-to-home-network request message includes information about the home network and/or a handover reason.

Correspondingly, the handover module disables an operational profile of the redundant network, enables an operational profile of the home network of the terminal, and sends the handover-to-home-network request message to the terminal.

Correspondingly, after receiving the handover-to-home-network request message, the terminal is handed over from the redundant network to the home network according to the information about the home network. The terminal sends, to the subscription management device by using the handover module, a handover-to-home-network success message, that is, notifies the subscription management device that the terminal has been handed over from the redundant network back to the home network, so that the subscription management device may stop the network handover timer.

It should be noted that when the terminal cannot be handed over from the redundant network to the home network after receiving the handover-to-home-network request message, optionally, the terminal may send, to the subscription management device by using the handover module, a handover-to-home-network failure message, that is, notify the subscription management device that the terminal cannot be handed over from the redundant network back to the home network, so that the subscription management device sends a handover-to-home network failure report to the home network operator or the service provider of the terminal. Optionally, the terminal may also not send, to the subscription management device by using the handover module, the handover-to-home-network failure message.
604. The subscription management device determines whether a handover-to-home-network success message is received before the network handover timer expires; if yes, perform step 605; otherwise, perform step 606.
605. The subscription management device stops the network handover timer.
   If the subscription management device receives the handover-to-home-network success message, it indicates that the terminal has successfully accessed the home network, the subscription management device may stop the network handover timer, and meanwhile, the subscription management device may clear a preset value of a counter.
606. The subscription management device determines whether a preset counter has reached a maximum value; if yes, perform step 607; otherwise, return to steps 602 and 603.

If the subscription management device has not received the handover-to-home-network success message, it indicates that the terminal has not accessed the home network, and in this case, the subscription management device needs to determine whether the preset counter has reached the maximum value.

It should be noted that the counter preset by the subscription management device is used to collect statistics on the number of network handover attempts; before the counter reaches a preset maximum value, the subscription management device may return to steps 602 and 603, and restart the network restoration timer; and after the network restoration timer expires, the subscription management device may further start the network handover timer; and at the same time, send the handover-to-home-network request message to the handover module. Each time steps 602 and 603 are performed, the value of the counter increases by 1 until the number of network handovers reaches the preset maximum value of the counter; if the subscription management device has not received, when the number of network handovers has reached the preset maximum value of the counter, the handover-to-home-network success message, the subscription management device does not send the handover-to-home-network request message to the handover module.
607. The subscription management device sends, to the home network operator or a service provider of the terminal, a handover-to-home-network failure message.

In this embodiment of the present invention, a counter preset by a subscription management device collects statistics on the number of network handover attempts, for example, before the counter reaches a preset maximum value, the subscription management device may reset a preset network restoration timer, and after the network restoration timer expires, the subscription management device may further restart a network handover timer, and at the same time, sends a handover-to-home-network request message to a handover module, so that the handover module disables an operational profile of the redundant network, enables an operational profile of a home network of the terminal, and sends the handover-to-home-network request message to the terminal. Therefore, there is no need for the terminal to periodically detect signal strength of the home network of the terminal, the terminal can be handed over from the redundant network to the home network, and it can be avoided that the terminal always detects the signal strength of the home network, so as to avoid a waste of power of the terminal.

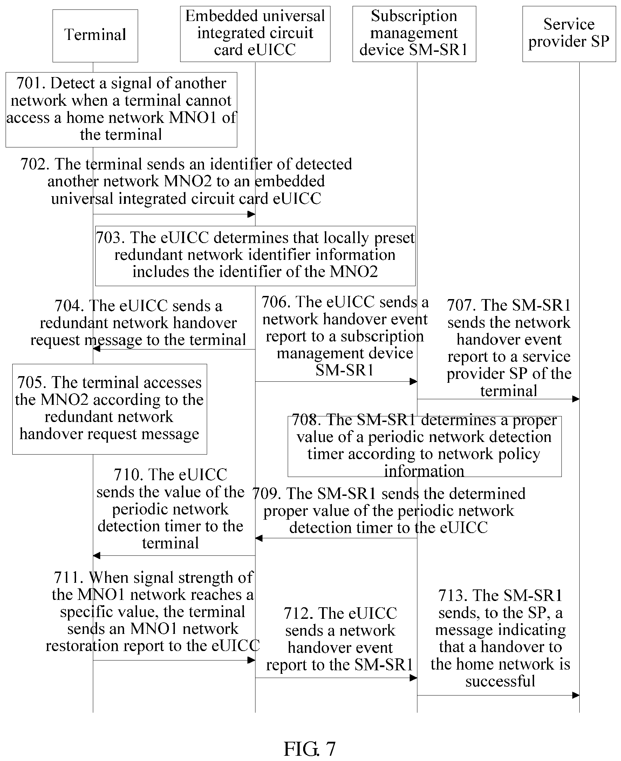

FIG. 7 is a signaling diagram of a network handover method according to yet another embodiment of the present invention. When a terminal cannot access a home network of the terminal, the terminal may be handed over from the home network to the redundant network, and after the redundant network is accessed, if the home network of the terminal is restored, a specific implementation process, initiated by the terminal, of a handover from the redundant network to the home network is shown in FIG. 7, and includes the following steps:
701. Detect a signal of another network when the terminal cannot access a home network MNO1 of the terminal.
   In this embodiment, the home network MNO1 of the terminal is a network corresponding to a home network operator of the terminal.
702. The terminal sends an identifier of detected another network MNO2 to an embedded universal integrated circuit card eUICC.
   The embedded universal integrated circuit card eUICC may be embedded in the terminal. The eUICC in this embodiment is the handover module described in any one of the foregoing embodiments 1 to 6.
703. The eUICC determines that locally preset redundant network identifier information includes the identifier of the MNO2.
   Specifically, the eUICC disables an operational profile 1 (Operational Profile 1, OP1) of the MNO1, and enables an OP2 of the MNO2.
704. The eUICC sends a handover-to-redundant-network request message to the terminal.
   The handover-to-redundant-network request message includes, for example, information needed for accessing the MNO2, and further includes, for example, an ICCID of the terminal and a handover reason.
705. The terminal accesses the MNO2 according to the handover-to-redundant-network request message.
706. The eUICC sends a network handover event report to a subscription management device SM-SR1.
   The network handover event report carries, for example, the identifier of the MNO2, an identifier of the terminal (for example an ICCID, an IMSI, or an IMEI), and the handover reason.
707. The SM-SR1 sends the network handover event report to a service provider SP of the terminal.
   The SP is notified that a service is provided by a network of the MNO2 for the terminal of the SP.
708. The SM-SR1 determines a proper value of a periodic network detection timer according to policy information.

Before step 708, for example, the subscription management device may acquire a restoration time of the home network by using the MNO1, and the subscription management device may determine a value of the periodic network detection timer according to the restoration time of the home network.

For another example, the subscription management device may acquire a network handover time by using the SP, and the subscription management device may determine a value of the periodic network detection timer according to the network handover time.

In specific implementation of step 708, generally, if a relatively long time is required for network restoration, the value of the periodic network detection timer that is determined according to the restoration time of the home network provided by the MNO1 is a little larger. However, the SP hopes that the eUICC can handover the terminal to a network of the MNO1 as soon as possible; therefore, the value of the periodic network detection timer that is determined according to the network handover time provided by the SP is a little smaller. In this embodiment, for example, a policy may be that the SM-SR1 preferentially use the value of the periodic network detection timer that is provided by the MNO1, or preferentially use the value of the periodic network detection timer that is provided by the SP. For another example, the policy may be that a largest value among values of the periodic network detection timer is preferentially used, or that a smallest value among the values of the periodic network detection timer is preferentially used.
709. The SM-SR1 sends the determined proper value of the periodic network detection timer to the eUICC.
710. The eUICC sends the value of the periodic network detection timer to the terminal.

If the SM-SR1 has sent the determined proper value of the periodic network detection timer to the eUICC, the eUICC sends the value of the periodic network detection timer determined by the SM-SR1 to the terminal.

If the SM-SR1 has not sent the determined value of the periodic network detection timer to the eUICC, in this embodiment, the eUICC may configure a default value of the periodic network detection timer, and the eUICC may send the value of the periodic network detection timer that is preset by the eUICC to the terminal.
711. When signal strength of an MNO1 network reaches a specific value, the terminal sends an MNO1 network restoration report to the eUICC.

For example, the terminal starts a periodic network detection timer, and periodically detects the signal strength of the MNO1 network, and when the signal strength of the MNO1 network reaches a specific value, the terminal sends an MNO1 network restoration report to the eUICC.

Correspondingly, the eUICC disables the OP2, and enables the OP1.
712. The eUICC sends a network handover event report to the SM-SR1.
   When the UE accesses the network of the MNO1, the eUICC sends the network handover event report to the SM-SR1 to notify the SM-SR1 that the terminal is handed over from the redundant network to the home network.
713. The SM-SR1 sends, to the SP, a handover-to-home-network success message.

The SM-SR1 sends, to the SP, the handover-to-home-network success message to notify the SP that the terminal is handed over from the redundant network to the home network, and the network of MNO1 provides a service for the terminal of the SP.

When the terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is avoided, and experience of a user is improved.

Further, in this embodiment of the present invention, the handover module sends a value of a periodic network detection timer determined by the subscription management device to the terminal, or sends a value of the periodic network detection timer that is preset by the handover module to the terminal, so that the terminal periodically detects signal strength of the home network of the terminal, when it is detected that the signal strength of the home network of the terminal is restored, a home network restoration report is sent to the handover module, and according to the home network restoration report, the handover module disables an operational profile of the redundant network and enables an operational profile of the home network of the terminal. In this way, when the signal strength of the home network of the terminal is restored, the terminal can be hand over from the redundant network to the home network, which improves experience of a user. The value of the periodic network detection timer determined by the subscription management device is determined according to a policy, and the periodic network detection timer is started only after a redundant network handover event occurs. Therefore, it can be avoided that the terminal always detects the signal strength of the home network, so as to avoid a waste of power of the terminal.

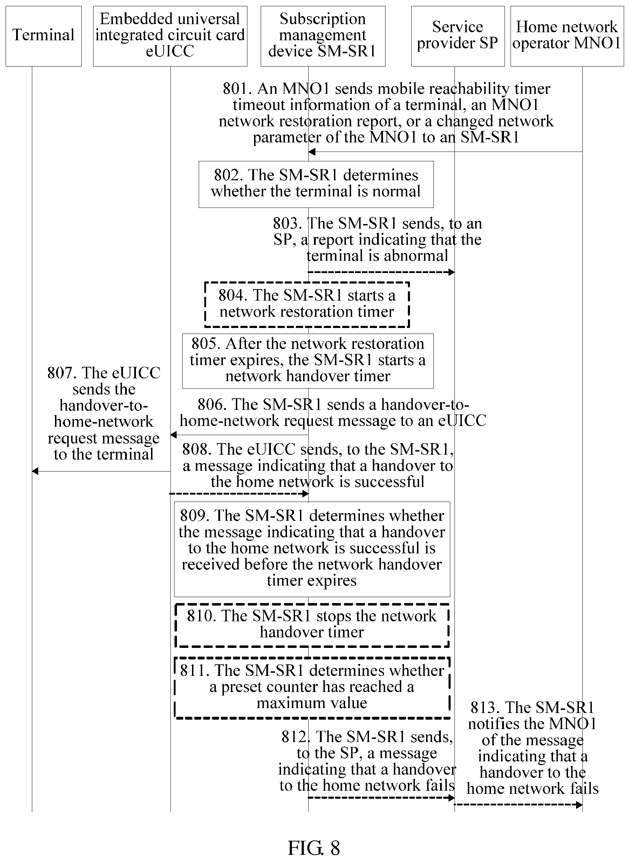

FIG. 8 is a signaling diagram of a network handover method according to yet another embodiment of the present invention. When a terminal cannot access a home network of the terminal, the terminal may be handed over from the home network to a redundant network. A specific implementation process is the same as steps 701 to 707 in the embodiment shown in FIG. 7, and details are not described herein again. A difference lies in that after the terminal accesses the redundant network, a handover from the redundant network to the home network may be initiated from a network side in this embodiment, and a specific implementation process is shown in FIG. 8 and includes the following steps:
801. An MNO1 sends mobile reachability timer timeout information of the terminal, an MNO1 network restoration report, or a changed network parameter of the MNO1 to an SM-SR1.

For example, after a mobile reachability timer of a terminal in the home network operator MNO1 network expires, the MNO1 sends the mobile reachability timer timeout information to the SM-SR1, where the mobile reachability timer timeout information carries an identifier of the terminal (for example an ICCID, an IMSI, or an IMEI).

For another example, if a network of the MNO1 is damaged, the MNO1 sends the MNO1 network restoration report to the SM-SR1 after the MNO1 restorations the damaged network, where the MNO1 network restoration report carries the identifier (for example ICCID, IMSI, or IMEI) of the terminal.

For another example, if a network parameter of the MNO1 changes, the MNO1 sends a changed network parameter of the MNO1 to the SM-SR1.
802. The SM-SR1 determines whether the terminal is normal; if yes, perform step 804; otherwise, perform step 803.

For example, if network handover event report sent by an eUICC has been received, the SM-SR1 determines that the terminal is normal, and further, step 804 is performed.

For another example, if the network handover event report sent by the eUICC has not been received, the SM-SR1 determines that the terminal is abnormal, and further, step 803 is performed.
803. The SM-SR1 sends, to an SP, a report indicating that the terminal is abnormal.

The report indicating that the terminal is abnormal carries the identifier (for example, ICCID or IMSI) of the terminal and a reason for abnormality.

Alternatively:
804. The SM-SR1 starts a network restoration timer.
   For example, the SM-SR1 starts a network restoration timer, where a value of the network restoration timer depends on a self-restoration capability of a network, for example, a home network restoration capability or a congestion control capability.
805. After the network restoration timer expires, the SM-SR1 starts a network handover timer.
806. The SM-SR1 sends a handover-to-home-network request message to an eUICC.
   The foregoing steps 805 and 806 may be concurrently processed, that is, the SM-SR1 may sends the handover-to-home-network request message to the eUICC at the same time when starting the network handover timer. The handover-to-home-network request message carries, for example, network information of the MNO1 and a handover reason.
807. The eUICC sends the handover-to-home network request message to the terminal.

The eUICC further disable an OP2 of an MNO2 and an OP1 of the MNO1 according to the handover-to-home-network request message.

If the terminal has accessed the network of the MNO1 according to a handover-to-home-network request, step 808 is performed; and if the terminal has not accessed the network of the MNO1 according to the home network handover request, step 808 is not performed.
808. The eUICC sends, to the SM-SR1, a handover-to-home-network success message.

For example, the UE successfully accesses the network of the MNO1 according to the home network handover request, and the eUICC sends, to the SM-SR1, the handover-to-home-network success message to notify the SM-SR1 that the terminal is handed over from the redundant network to the home network.

Correspondingly, after receiving the network handover event report from the eUICC, the SM-SR1 stops the network handover timer and clears a value of a counter.
809. The SM-SR1 determines whether the handover-to-home-network success message is received before the network handover timer expires; if yes, perform step 810; otherwise, perform step 811.
810. The SM-SR1 stops the network handover timer.

It is assumed that the SM-SR1 determines that the handover-to-home-network success message is received before the network handover timer expires, it indicates that the terminal has accessed the home network, and in this case, the SM-SR1 stops the network handover timer, and at the same time, may also clear a preset value of the counter. Alternatively:
811. The SM-SR1 determines whether a preset counter has reached a maximum value; if yes, perform steps 812 and 813; otherwise, returns to steps 804 to 806.
   It is assumed that the SM-SR1 determines that the handover-to-home-network success message is not received before the network handover timer expires, it indicates that the terminal has not accessed the home network, and in this case, the SM-SR1 needs to determine whether the preset counter has reached a maximum value; if the preset counter has reached the maximum value, it indicates that the number of handover-to-home network attempts has reached a maximum value, and there is no need to send the handover-to-home-network request message to the eUICC; if the preset counter has not reached the maximum value, it indicates that the number of handover-to-home network attempts has not reached the maximum value, the SM-SR1 returns to steps 811 to 813, and continues to start the network restoration timer, and after the network restoration timer expires, the SM-SR1 starts the network handover timer, and at the same time, sends the handover-to-home-network request message to the eUICC.
812. The SM-SR1 sends, to the SP, a handover-to-home-network failure message.
   The SM-SR1 sends the network handover event report to the SP to notify the SP that the terminal is handed over from the redundant network to the home network.
813. The SM-SR1 notifies the MNO1 of the handover-to-home-network failure message.

The foregoing steps 812 and 813 may be processed in parallel.

When the terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is avoided, and experience of a user is improved.

Further, in this embodiment of the present invention, a counter preset by a subscription management device collects statistics on the number of network handover attempts, for example, before the counter reaches a preset maximum value, the subscription management device may preset a network restoration timer, and after the network restoration timer expires, the subscription management device may further start a network handover timer, and at the same time, sends a handover-to-home-network request message to a handover module, so that the handover module disables an operational profile of the redundant network, enables an operational profile of a home network of the terminal, and sends the handover-to-home-network request message to the terminal. Therefore, there is no need for the terminal to periodically detect signal strength of the home network of the terminal, the terminal can be handed over from the redundant network to the home network, and it can be avoided that the terminal always detects the signal strength of the home network, so as to avoid a waste of power of the terminal.

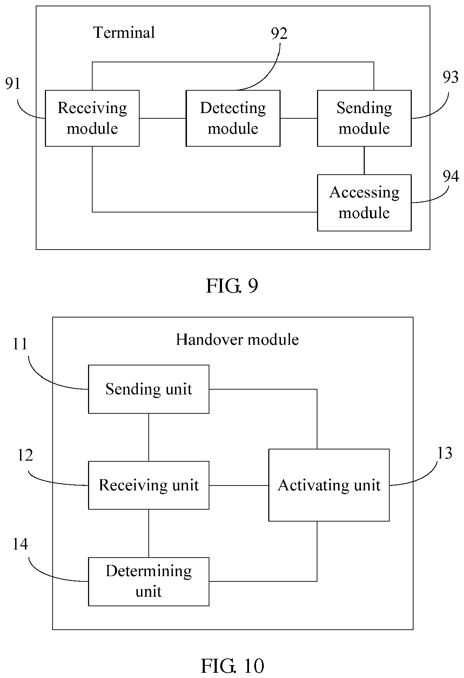

FIG. 9 is a schematic structural diagram of a terminal according to yet another embodiment of the present invention. As shown in FIG. 9, the terminal includes:
a receiving module 91, configured to, after a terminal is handed over from a home network to a redundant network, receive a value of a periodic network detection timer that sent by a handover module, where the value of the periodic network detection timer is determined by a subscription management device according to a policy and sent to the handover module, or the value of the periodic network detection timer is preset by the handover module;
a detecting module 92, configured to periodically detect signal strength of the home network of the terminal according to the value of the periodic network detection timer received by the receiving module 91;
a sending module 93, configured to, on a basis of detecting, by the detecting module 92, that the signal strength of the home network of the terminal is restored, send a home network restoration report to the handover module, so that the handover module disables an operational profile of the redundant network and enables an operational profile of the home network of the terminal; and
an accessing module 94, configured to access the home network after the sending module 93 sends the home network restoration report to the handover module.

In an optional implementation manner of the present invention, the sending module 93 is further configured to send, to the handover module, a handover-to-home-network success message, so that the handover module sends the handover-to-home-network success message to the subscription management device.

In an optional implementation manner of the present invention, the receiving module 91 is further configured to receive a handover-to-home-network request message sent by the handover module, where the handover-to-home-network request message is sent by the subscription management device to the handover module, and the handover-to-home-network request message includes information about the home network and/or a handover reason; and
the sending module 93 is further configured to send, to the handover module on a basis of accessing the home network by the accessing module 94 according to the information about the home network, a handover-to-home-network success message, so that the handover module sends the handover-to-home-network success message to the subscription management device.

In an optional implementation manner of the present invention, the detecting module 92 is further configured to obtain, by means of detection, a signal of at least one of other networks when the terminal cannot access the home network; and
the sending module 93 is further configured to send an identifier of the another network detected by the detecting module 92 to the handover module, so that on a basis of determining that a locally preset identifier of the redundant network is the same as the identifier of the another network, the handover module disables the operational profile of the home network, enables the operational profile of the redundant network of the terminal, and sends a handover-to-redundant-network request message to the terminal, where the handover-to-redundant-network request message includes information needed for accessing the redundant network; and
the accessing module 94 is further configured to access the redundant network according to the information that is needed for accessing the redundant network and received by the receiving module 91.

When a terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is not caused, continuity of a service is ensured, and experience of a user is improved.

The terminal in this embodiment of the present invention can periodically detect signal strength of a home network of the terminal according to a value of a periodic network detection timer that is sent by a handover module, and send a home network restoration report to the handover module when it is detected that the signal strength of the home network of the terminal is restored, so that according to the home network restoration report, the handover module disables an operational profile of the redundant network and enables an operational profile of the home network of the terminal. In this way, when the signal strength of the home network of the terminal is restored, the terminal can be hand over from the redundant network to the home network, thereby ensuring continuity of a service and improving experience of a user.

In addition, the terminal can periodically detect the signal strength of the home network of the terminal according to a determined value of the periodic network detection timer, where the value of the periodic network detection timer may be determined by a subscription management device according to policy information, and the periodic network detection timer is started only after a redundant network handover event occurs. Therefore, it can be avoided that the terminal always detects the signal strength of the home network, so as to avoid a waste of power of the terminal.

FIG. 10 is a schematic structural diagram of a handover module according to yet another embodiment of the present invention. As shown in FIG. 10, the handover module includes:
a sending unit 11, configured to send, after a terminal is handed over from a home network to a redundant network, a value of a periodic network detection timer to the terminal, where the value of the periodic network detection timer is determined by a subscription management device according to a policy and sent to the handover module, or the value of the periodic network detection timer is preset by the handover module, so that the terminal periodically detects signal strength of the home network of the terminal according to the value of the periodic network detection timer;
a receiving unit 12, configured to receive a home network restoration report sent by the terminal; and
an activating unit 13, configured to, according to the home network restoration report received by the receiving unit 12, disable an operational profile of the redundant network and enable an operational profile of the home network of the terminal, so that the terminal accesses the home network.

In an optional implementation manner of the present invention, the sending unit 11 is further configured to send a handover-to-home-network success message to the subscription management device based on the home network restoration report received by the receiving unit.

In an optional implementation manner of the present invention, the receiving unit 12 is further configured to receive a handover-to-home-network request message sent by the subscription management device;
the activating unit 13 is further configured to, based on the handover-to-home-network request message received by the receiving unit 12, disable an operational profile of the redundant network and enable an operational profile of the home network of the terminal;
the sending unit 11 is further configured to, on a basis of deactivating, by the activating unit 13, an operational profile of the redundant network and activating and an operational profile of the home network of the terminal, send the handover-to-home-network request message to the terminal, where the handover-to-home-network request message includes information about the home network and/or a handover reason; and
the sending unit 11 is further configured to send, to the subscription management device if the receiving unit 12 receives a handover-to-home-network success message sent by the terminal, the handover-to-home-network success message.

In an optional implementation manner of the present invention, the receiving unit 12 is further configured to receive an identifier of another network sent by the terminal, where the another network is a network corresponding to a signal of another network detected when the terminal cannot access the home network;
the handover module further includes:
a determining unit 14, configured to determine, based on the identifier of the another network received by the receiving unit 12, that a locally preset identifier of a redundant network is the same as the identifier of the another network;
the activating unit 13 is further configured to, on a basis of determining, by the determining unit 14, that the locally preset identifier of a redundant network is the same as the identifier of the another network, disable an operational profile of the home network of the terminal, and enable an operational profile of the redundant network; and
the sending unit 11 is further configured to send a handover-to-redundant-network request message to the terminal, where the handover-to-redundant-network request message includes information needed for accessing the redundant network, so that the terminal accesses the redundant network according to the information needed for accessing the redundant network.

In an optional implementation manner of the present invention, the sending unit 11 is further configured to send a network handover event report to the subscription management device, where the network handover event report includes an identifier of the redundant network, an identifier of the terminal, and a handover reason, so that the subscription management device determines the value of the periodic network detection timer according to the policy, and sends the determined value of the periodic network detection timer to the handover module.

The foregoing handover module includes an embedded universal integrated circuit card.

When the terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is avoided, and experience of a user is improved.

Further, in this embodiment of the present invention, the handover module sends a value of a periodic network detection timer determined by the subscription management device to the terminal, or sends a value of the periodic network detection timer that is preset by the handover module to the terminal, so that the terminal periodically detects signal strength of the home network of the terminal, when it is detected that the signal strength of the home network of the terminal is restored, a home network restoration report is sent to the handover module, and according to the home network restoration report, the handover module disables an operational profile of the redundant network and enables an operational profile of the home network of the terminal. In this way, when the signal strength of the home network of the terminal is restored, the terminal can be hand over from the redundant network to the home network, which improves experience of a user. The value of the periodic network detection timer determined by the subscription management device is determined according to policy information, and the periodic network detection timer is started only after a redundant network handover event occurs. Therefore, it can be avoided that the terminal always detects the signal strength of the home network, so as to avoid a waste of power of the terminal.

Further, in this embodiment of the present invention, there may be no need for the terminal to periodically detect the signal strength of the home network of the terminal, instead, the terminal can be hand over from the redundant network to the home network according to a handover-to-home-network request message sent by the handover module. It can be avoided that the terminal always detects the signal strength of the home network, so as to avoid a waste of power of the terminal.

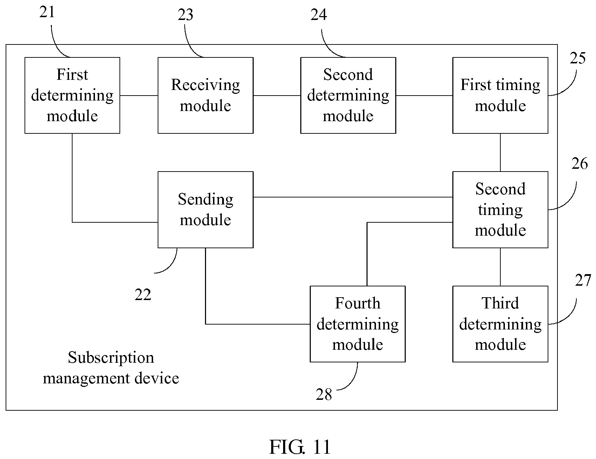

FIG. 11 is a schematic structural diagram of a subscription management device according to yet another embodiment of the present invention. As shown in FIG. 11, the subscription management device includes:
a first determining module 21, configured to, after a terminal is handed over from a home network to a redundant network, determine a value of a periodic network detection timer according to a policy; and
a sending module 22, configured to send the determined value of the periodic network detection timer to the handover module according to the value of the periodic network detection timer determined by the first determining module 21, so that the handover module sends the determined value of the periodic network detection timer to the terminal, and the terminal periodically detects signal strength of the home network of the terminal, and on a basis of detecting that the signal strength of the home network of the terminal is restored, sends a home network restoration report to the handover module, and accesses the home network.

In an optional implementation manner of the present invention, the subscription management device further includes:
a receiving module 23, configured to receive a network handover event report sent by the handover module, where the network handover event report includes an identifier of the redundant network, an identifier of the terminal, and a handover reason, and the network handover event report is a network handover event report sent by the handover module to the subscription management device, where when the terminal cannot access the home network, the terminal sends an identifier of another network whose signal is detected to the handover module, so that on a basis of determining that a locally preset identifier of the redundant network is the same as the identifier of the another network, and on a basis of accessing the redundant network by the terminal after a handover-to-redundant-network request message is sent to the terminal, the handover module sends the network handover event report to the subscription management device; and the network handover event report is used to trigger the first determining module 21 to determine the value of the periodic network detection timer according to the policy.

In an optional implementation manner of the present invention, the receiving module 23 is further configured to receive a mobile reachability timer timeout report of the terminal, the home network restoration report, or an information change report of the home network that is sent by a home network operator of the terminal; and
the subscription management device further includes:
a second determining module 24, configured to, based on the mobile reachability timer timeout report of the terminal, the home network restoration report, or the information change report of the home network that is received by the receiving module 23, determine that the terminal is normal if it is determined that a network handover event report sent by the handover module is received; where
the second determining module 24 is further configured to, if it is determined that the network handover event report sent by the handover module is not received, determine that the terminal is abnormal, and send, to the home network operator or a service provider of the terminal by using the sending module 22, a message indicating that the terminal is abnormal.

In an optional implementation manner of the present invention, the subscription management device further includes:
a first timing module 25, configured to start a preset network restoration timer on a basis of determining, by the second determining module 24, that the terminal is normal; and
a second timing module 26, configured to start a preset network handover timer after the network restoration timer preset by the first timing module 25 expires; where
the sending module 22 is further configured to, at the same time when the second timing module 26 starts the preset network handover timer, send handover-to-home-network request message to the handover module, so that the handover module sends the handover-to-home-network request message to the terminal, where the handover-to-home-network request message includes information about the home network and/or a handover reason.

In an optional implementation manner of the present invention, the subscription management device further includes:
a third determining module 27, configured to, after the network handover timer started by the second timing module 26 expires, stop the network handover timer if it is determined that a message that is sent by the handover module and indicates that a handover to the home network is successful is received.

In an optional implementation manner of the present invention, the subscription management device further includes:
a fourth determining module 28, configured to, after the network handover timer started by the second timing module 26 expires, if it is determined that the message that is sent by the handover module and indicates that a handover to the home network is successful is not received, and it is determined that a preset counter has not reached a maximum value, restart the first timing module and the second timing module, and increase a value of the counter by 1, where
the sending module 22 is further configured to, when the preset counter reaches the maximum value and it is determined that the fourth determining module 28 has not received the message that is sent by the handover module and indicates that a handover to the home network is successful, send, to the home network operator or the service provider of the terminal, a handover-to-home-network failure message.

In this embodiment of the present invention, a subscription management device determines a value of a periodic network detection timer according to policy information, and sends the determined value of the periodic network detection timer to a terminal by using a handover module, so that the terminal periodically detects signal strength of a home network of the terminal, and sends a home network restoration report to the handover module when it is detected that the signal strength of the home network of the terminal is restored, so that according to the home network restoration report, the handover module disables an operational profile of a redundant network and enables an operational profile of the home network of the terminal. In this way, when the signal strength of the home network of the terminal is restored, the terminal can be hand over from the redundant network to the home network, which improves experience of a user. The value of the periodic network detection timer may be determined according to the policy information, and the periodic network detection timer is started only after a redundant network handover event occurs. Therefore, it can be avoided that the terminal always detects the signal strength of the home network, so as to avoid a waste of power of the terminal.

In addition, in this embodiment of the present invention, a counter preset by a subscription management device may further collect statistics on the number of network handover attempts, for example, before the counter reaches a preset maximum value, the subscription management device may preset a network restoration timer, and after the network restoration timer expires, the subscription management device may further start a network handover timer, and at the same time, sends a handover-to-home-network request message to a handover module, so that the handover module disables an operational profile of the redundant network, enables an operational profile of the home network of the terminal, and sends the handover-to-home-network request message to the terminal. Therefore, there is no need for the terminal to periodically detect signal strength of the home network of the terminal, the terminal can be handed over from the redundant network to the home network, and it can be avoided that the terminal always detects the signal strength of the home network, so as to avoid a waste of power of the terminal.

In yet another embodiment of the present invention, a terminal is further provided, including a processor, where the processor executes the following steps during operation:
after a terminal is handed over from a home network to a redundant network, the processor receives a value of a periodic network detection timer that is sent by a handover module, where the value of the periodic network detection timer is determined by a subscription management device according to a policy and sent to the handover module, or the value of the periodic network detection timer is preset by the handover module;
the processor periodically detects signal strength of the home network of the terminal according to the value of the periodic network detection timer; and

If it is detected that the signal strength of the home network of the terminal is restored, the processor sends a home network restoration report to the handover module, so that the handover module disables an operational profile of the redundant network and enables an operational profile of the home network of the terminal, so that the terminal accesses the home network.

In a first possible implementation manner, after the accessing, by the terminal, the home network, the processor further executes the following step:
the processor sends a handover-to-home-network success message to the handover module, so that the handover module sends the handover-to-home-network success message to the subscription management device.

In a second possible implementation manner, after the terminal is handed over from the home network to the redundant network, the processor further executes the following steps:
the processor receives a handover-to-home-network request message sent by a handover module, where the handover-to-home-network request message is sent by the subscription management device to the handover module, and the handover-to-home-network request message includes information about the home network and/or a handover reason; and
if the terminal accesses the home network, the processor sends a handover-to-home-network success message to the handover module, so that the handover module sends the handover-to-home-network success message to the subscription management device.

Based on the first and the second possible implementation manners, in a third possible implementation manner, before the terminal is handed over from the home network to the redundant network, the processor further executes the following steps:
when the terminal cannot access the home network, the processor obtains, by means of detection, a signal of at least one of other networks; and
the processor sends an identifier of detected another network to the handover module, so that on a basis of determining that a locally preset identifier of the redundant network is the same as the identifier of the another network, the handover module disables the operational profile of the home network, enables the operational profile of the redundant network of the terminal, and sends a handover-to-redundant-network request message to the terminal, where the handover-to-redundant-network request message includes information needed for accessing the redundant network, so that the terminal accesses the redundant network according to the information needed for accessing the redundant network.

Specifically, the terminal further includes, in addition to including the processor, a memory, a bus, a hard disk, and other components, where the processor is separately connected to the memory and the hard disk by using the bus.

When a terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is not caused, continuity of a service is ensured, and experience of a user is improved.

The terminal in this embodiment of the present invention can periodically detect signal strength of a home network of the terminal according to a value of a periodic network detection timer that is sent by a handover module, and send a home network restoration report to the handover module when it is detected that the signal strength of the home network of the terminal is restored, so that according to the home network restoration report, the handover module disables an operational profile of the redundant network and enables an operational profile of the home network of the terminal. In this way, when the signal strength of the home network of the terminal is restored, the terminal can be hand over from the redundant network to the home network, thereby ensuring continuity of a service and improving experience of a user.

In addition, the terminal can periodically detect the signal strength of the home network of the terminal according to a determined value of the periodic network detection timer, where the value of the periodic network detection timer may be determined by a subscription management device according to policy information, and the periodic network detection timer is started only after a redundant network handover event occurs. Therefore, it can be avoided that the terminal always detects the signal strength of the home network, so as to avoid a waste of power of the terminal.

In yet another embodiment of the present invention, a handover module is further provided, including a processor, where the processor executes the following steps during operation:
after a terminal is handed over from a home network to a redundant network, the processor sends a value of a periodic network detection timer to the terminal, where the value of the periodic network detection timer is determined by a subscription management device according to a policy and sent to the handover module, or the value of the periodic network detection timer is preset by the handover module, so that the terminal periodically detects signal strength of the home network of the terminal according to the value of the periodic network detection timer;
the processor receives a home network restoration report sent by the terminal; and
the processor disables an operational profile of the redundant network, and enables an operational profile of the home network of the terminal, so that the terminal accesses the home network.

In a first possible implementation manner, after the processor disables an operational profile of the redundant network, and enables an operational profile of the home network of the terminal, so that the terminal accesses the home network, the following is included:
the processor sends a handover-to-home-network success message to the subscription management device.

In a second possible implementation manner, after the terminal is handed over from the home network to the redundant network, the processor further executes the following steps:
the processor receives a handover-to-home-network request message sent by the subscription management device;
the processor disables an operational profile of the redundant network, and enables an operational profile of the home network of the terminal;
the processor sends the handover-to-home-network request message to the terminal, where the handover-to-home-network request message includes information about the home network and/or a handover reason; and
if the processor receives a handover-to-home-network success message sent by the terminal, the processor sends the handover-to-home-network success message to the subscription management device.

Based on the first and the second possible implementation manners, in a third possible implementation manner, before the terminal is handed over from the home network to the redundant network, the processor further executes the following steps:
the processor receives an identifier of another network sent by the terminal, where the another network is a network corresponding to a signal of another network detected when the terminal cannot access the home network;
the processor determines that a locally preset identifier of a redundant network is the same as the identifier of the another network;
the processor disables an operational profile of the home network of the terminal, and enables an operational profile of the redundant network; and
the processor sends a handover-to-redundant-network request message to the terminal, where the handover-to-redundant-network request message includes information needed for accessing the redundant network, so that the terminal accesses the redundant network according to the information needed for accessing the redundant network.

Based on the third possible implementation manner, in a fourth possible implementation manner, after the processor sends a handover-to-redundant-network request message to the terminal, where the handover-to-redundant-network request message includes information needed for accessing the redundant network, so that the terminal accesses the redundant network according to the information needed for accessing the redundant network, the following is included:
the processor sends a network handover event report to the subscription management device, where the network handover event report includes an identifier of the redundant network, an identifier of the terminal, and a handover reason, so that the subscription management device determines the value of the periodic network detection timer according to the policy, and sends the determined value of the periodic network detection timer to the handover module; and
the processor may be integrated in an embedded universal integrated circuit card.

When the terminal in this embodiment of the present invention cannot access a home network of the terminal, the terminal may send, to a handover module, an identifier of another network corresponding to a detected signal of the another network, so that the handover module returns, on a basis of determining that a locally preset identifier of the redundant network is the same as the identifier of the another network, information needed for accessing the redundant network to the terminal, and the terminal accesses the redundant network according to the information needed for accessing the redundant network. In this way, when a terminal cannot access a home network of the terminal, the terminal can be automatically handed over to another network, so that a problem of communication interruption is avoided, and experience of a user is improved.

Further, in this embodiment of the present invention, the handover module sends a value of a periodic network detection timer determined by the subscription management device to the terminal, or sends a value of the periodic network detection timer that is preset by the handover module to the terminal, so that the terminal periodically detects signal strength of the home network of the terminal, when it is detected that the signal strength of the home network of the terminal is restored, a home network restoration report is sent to the handover module, and according to the home network restoration report, the handover module disables an operational profile of the redundant network and enables an operational profile of the home network of the terminal. In this way, when the signal strength of the home network of the terminal is restored, the terminal can be hand overfrom the redundant network to the home network, which improves experience of a user. The value of the periodic network detection timer determined by the subscription management device is determined according to policy information, and the periodic network detection timer is started only after a redundant network handover event occurs. Therefore, it can be avoided that the terminal always detects the signal strength of the home network, so as to avoid a waste of power of the terminal.

Further, in this embodiment of the present invention, there may be no need for the terminal to periodically detect the signal strength of the home network of the terminal, instead, the terminal is hand over from the redundant network to the home network according to a handover-to-home-network request message sent by the handover module. It can be avoided that the terminal always detects the signal strength of the home network, so as to avoid a waste of power of the terminal.

In yet another embodiment of the present invention, a subscription management device is provided, including a processor, where the processor executes the following steps during operation:
after a terminal is handed over from a home network to a redundant network, the processor determines a value of a periodic network detection timer according to a policy; and
the processor sends the determined value of the periodic network detection timer to the handover module, so that the handover module sends the determined value of the periodic network detection timer to the terminal, and the terminal periodically detects signal strength of the home network of the terminal, and on a basis of detecting that the signal strength of the home network of the terminal is restored, sends a home network restoration report to the handover module, and accesses the home network.

In a first possible implementation manner, before the processor determines a value of a periodic network detection timer according to a policy, the following is included:
the processor receives a network handover event report sent by the handover module, where the network handover event report includes an identifier of the redundant network, an identifier of the terminal, and a handover reason, and the network handover event report is a network handover event report sent by the handover module to the subscription management device, where when the terminal cannot access the home network, the terminal sends an identifier of another network whose signal is detected to the handover module, so that on a basis of determining that a locally preset identifier of the redundant network is the same as the identifier of the another network, and on a basis of accessing the redundant network by the terminal after a handover-to-redundant-network request message is sent to the terminal, the handover module sends the network handover event report to the subscription management device.

In a second possible implementation manner, after the terminal is handed over from the home network to the redundant network, the processor further executes the following steps:
the processor receives a mobile reachability timer timeout report of the terminal, or the home network restoration report, or an information change report of the home network that is sent by a home network operator of the terminal;
if it is determined that a network handover event report sent by the handover module is received, the processor determines that the terminal is normal; and
if it is determined that the network handover event report sent by the handover module is not received, the processor determines that the terminal is abnormal, and sends a message indicating that the terminal is abnormal to the home network operator or a service provider of the terminal.

Based on a second possible implementation manner, in a third possible implementation manner, after the processor determines that the terminal is normal, the following is included:
the processor starts a preset network restoration timer; and
after the network restoration timer expires, the processor starts a preset network handover timer, and sends a handover-to-home-network request message to the handover module, so that the handover module sends the handover-to-home-network request message to the terminal, where the handover-to-home-network request message includes information about the home network and a handover reason.

Based on the third possible implementation manner, in a fourth possible implementation manner, after the processor starts a preset network handover timer, and sends the handover-to-home-network request message to the handover module, the following is included:
after the network handover timer expires, if it is determined that a message that is sent by the handover module and indicates that a handover to the home network is successful is received, the processor stops the network handover timer.

Based on the fourth possible implementation manner, in a fifth possible implementation manner, after the network handover timer expires, the following is included:
if the processor determines that the message that is sent by the handover module and indicates that a handover to the home network is successful is not received and determines that a preset counter has not reached a maximum value, the processor restarts the preset network restoration timer; and after the network restoration timer expires, the processor restarts the preset network handover timer, sends the handover-to-home-network request message to the handover module, and increases a value of the counter by one; and
if it is determined that the message that is sent by the handover module and indicates that a handover to the home network is successful is not received until the preset counter reaches the maximum value, the processor sends, to the home network operator or the service provider of the terminal, a handover-to-home-network failure message.

Specifically, the subscription management device further includes, in addition to including the processor, a memory, a bus, a hard disk, and other components, where the processor is separately connected to the memory and the hard disk by using the bus.

In this embodiment of the present invention, a subscription management device determines a value of a periodic network detection timer according to policy information, and sends the determined value of the periodic network detection timer to a terminal by using a handover module, so that the terminal periodically detects signal strength of the home network of the terminal, and sends a home network restoration report to the handover module when it is detected that the signal strength of the home network of the terminal is restored, so that according to the home network restoration report, the handover module disables an operational profile of a redundant network and enables an operational profile of the home network of the terminal. In this way, when the signal strength of the home network of the terminal is restored, the terminal can be hand over from the redundant network to the home network, which improves experience of a user. The value of the periodic network detection timer may be determined according to the policy information, and the periodic network detection timer is started only after a redundant network handover event occurs. Therefore, it can be avoided that the terminal always detects the signal strength of the home network, so as to avoid a waste of power of the terminal.

In addition, in this embodiment of the present invention, a counter preset by a subscription management device may further collect statistics on the number of network handover attempts, for example, before the counter reaches a preset maximum value, the subscription management device may preset a network restoration timer, and after the network restoration timer expires, the subscription management device may further start a network handover timer, and at the same time, sends a handover-to-home-network request message to a handover module, so that the handover module disables an operational profile of the redundant network, enables an operational profile of a home network of the terminal, and sends the handover-to-home-network request message to the terminal. Therefore, there is no need for the terminal to periodically detect signal strength of the home network of the terminal, the terminal can be handed over from the redundant network to the home network, and it can be avoided that the terminal always detects the signal strength of the home network, so as to avoid a waste of power of the terminal.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a form of code in a computer-readable storage medium. The foregoing code is stored in a computer-readable storage medium and includes several instructions that are used by a processor or a hardware circuit to execute a part of or all steps of the method in each embodiment of the present invention. The foregoing storage medium includes: any medium that can store program code, such as a no-physical-drive miniature high-capacity mobile storage disk of a universal serial bus interface, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of the embodiments of the present invention.

## Claims

1. A network handover method, comprising:
after a terminal is handed over from a home network to a redundant network, receiving, by the terminal, a value of a periodic network detection timer that is sent by a handover module (405, 710), wherein the value of the periodic network detection timer is determined by a subscription management device by acquiring a restoration time of the home network through a home network operator of the terminal and determining the value of the periodic network detection timer according to the restoration time, or the value of the periodic network detection timer is determined by the subscription management device by acquiring a handover time through a service provider of the terminal and determining the value of the periodic network detection timer according to the network handover time and sent to the handover module (708);
periodically detecting, by the terminal, signal strength of the home network of the terminal according to the value of the periodic network detection timer (202);
if it is detected that the signal strength of the home network of the terminal is restored, sending a home network restoration report to the handover module, so that the handover module disables an operational profile of the redundant network and enables an operational profile of the home network of the terminal (406, 711); and
accessing, by the terminal, the home network (204).

2. The method according to claim 1, wherein after the accessing, by the terminal, the home network, the method further comprises:
sending, by the terminal to the handover module, a handover-to-home-network success message, so that the handover module sends the handover-to-home-network success message to the subscription management device.

3. The method according to any one of claims 1 to 2, wherein before the terminal is handed over from the home network to the redundant network, the method further comprises:
when the terminal cannot access the home network, obtaining, by the terminal by means of detection, a signal of at least one of other networks; and
sending, by the terminal, an identifier of a detected another network to the handover module, so that on a basis of determining that a locally preset identifier of the redundant network is the same as the identifier of the another network, the handover module disable the operational profile of the home network, enables the operational profile of the redundant network of the terminal, and sends a handover-to-redundant-network request message to the terminal, wherein the handover-to-redundant-network request message comprises information needed for accessing the redundant network; and
that the terminal is handed over from the home network to the redundant network is specifically that: the terminal accesses the redundant network according to the information needed for accessing the redundant network.

4. A network handover method, comprising:
after a terminal is handed over from a home network to a redundant network, sending, by a handover module, a value of a periodic network detection timer to the terminal (405, 710),
wherein the value of the periodic network detection timer is determined by a subscription management device by acquiring a restoration time of the home network through a home network operator of the terminal and determining the value of the periodic network detection timer according to the restoration time, or the value of the periodic network detection timer is determined by the subscription management device by acquiring a handover time through a service provider of the terminal and determining the value of the periodic network detection timer according to the network handover time and sent to the handover module (708), so that the terminal periodically detects signal strength of the home network of the terminal according to the value of the periodic network detection timer (202);
receiving, by the handover module, a home network restoration report sent by the terminal when it accesses the home network again (711); and deactivating (406), by the handover module, an operational profile of the redundant network, and activating an operational profile of the home network of the terminal.

5. The method according to claim 4, wherein after the deactivating, by the handover module, an operational profile of the redundant network, and activating an operational profile of the home network of the terminal, the method further comprises:
sending, by the handover module, a handover-to-home-network success message to the subscription management device.

6. The method according to any one of claims 4 to 5, wherein before the terminal is handed over from the home network to the redundant network, the method further comprises:
receiving, by the handover module, an identifier of another network sent by the terminal, wherein the another network is a network corresponding to a signal of another network detected when the terminal cannot access the home network;
determining, by the handover module, that a locally preset identifier of a redundant network is the same as the identifier of the another network;
deactivating, by the handover module, the operational profile of the home network of the terminal, and activating the operational profile of the redundant network; and
sending, by the handover module, a handover-to-redundant-network request message to the terminal, wherein the handover-to-redundant-network request message comprises information needed for accessing the redundant network, so that the terminal accesses the redundant network according to the information needed for accessing the redundant network.

7. The method according to claim 6, wherein after the sending, by the handover module, a handover-to-redundant-network request message to the terminal, wherein the handover-to-redundant-network request message comprises information needed for accessing the redundant network, the method further comprises:
sending, by the handover module, a network handover event report to the subscription management device, wherein the network handover event report comprises an identifier of the redundant network, an identifier of the terminal, and a handover reason, so that the subscription management device determines the value of the periodic network detection timer according to the policy, and sends the determined value of the periodic network detection timer to the handover module.

8. The method according to any one of claims 4 to 7, wherein the handover module comprises an embedded universal integrated circuit card.

9. A network handover method, comprising:
after a terminal is handed over from a home network to a redundant network (704), determining, by a subscription management device, a value of a periodic network detection timer by acquiring a restoration time of the home network through a home network operator of the terminal and determining the value of the periodic network detection timer according to the restoration time, or determining, by the subscription management device, the value of the periodic network detection timer by acquiring a handover time through a service provider of the terminal and determining the value of the periodic network detection timer according to the network handover time (708); and
sending, by the subscription management device, the determined value of the periodic network detection timer to the handover module (709), so that the handover module sends the determined value of the periodic network detection timer to the terminal (710), and the terminal periodically detects signal strength of the home network of the terminal (202), and
on a basis of detecting that the signal strength of the home network of the terminal is restored, sends a home network restoration report to the handover module (406, 711), and accesses the home network (204).

10. The method according to claim 9, wherein before the determining, by a subscription management device, a value of a periodic network detection timer according to a policy, the method further comprises:
receiving, by the subscription management device, a network handover event report sent by the handover module, wherein the network handover event report comprises an identifier of the redundant network, an identifier of the terminal, and a handover reason, and the network handover event report is a network handover event report sent by the handover module to the subscription management device, wherein when the terminal cannot access the home network, the terminal sends an identifier of another network whose signal is detected to the handover module, so that on a basis of determining that a locally preset identifier of the redundant network is the same as the identifier of the another network, and on a basis of accessing the redundant network by the terminal after a handover-to-redundant-network request message is sent to the terminal, the handover module sends the network handover event report to the subscription management device.

11. A terminal, comprising:
a receiving module (91), configured to, after a terminal is handed over from a home network to a redundant network (704), receive a value of a periodic network detection timer that is sent by a handover module (405, 710), wherein the value of the periodic network detection timer is determined by a subscription management device by acquiring a restoration time of the home network through a home network operator of the terminal and determining the value of the periodic network detection timer according to the restoration time, or the value of the periodic network detection timer is determined by the subscription management device by acquiring a handover time through a service provider of the terminal and determining the value of the periodic network detection timer according to the network handover time and sent to the handover module (708);
a detecting module (92), configured to periodically detect signal strength of the home network of the terminal according to the value of the periodic network detection timer received by the receiving module (202);
a sending module (93), configured to, on a basis of detecting, by the detecting module, that the signal strength of the home network of the terminal is restored, send a home network restoration report to the handover module, for causing the handover module to disable an operational profile of the redundant network and to enable an operational profile of the home network of the terminal (406, 711); and
an accessing module (94), configured to access the home network after the sending module sends the home network restoration report to the handover module (204).

12. The terminal according to claim 11, wherein the sending module is further configured to send, to the handover module, a handover-to-home-network success message, so that the handover module sends the handover-to-home-network success message to the subscription management device.

13. The terminal according to any one of claims 11 to 12, wherein the detecting module is further configured to obtain, by means of detection, a signal of at least one of other networks when the terminal cannot access the home network;
the sending module is further configured to send an identifier of the detected another network to the handover module, so that on a basis of determining that a locally preset identifier of the redundant network is the same as the identifier of the another network, the handover module disables the operational profile of the home network, enables the operational profile of the redundant network of the terminal, and sends a handover-to-redundant-network request message to the terminal, wherein the handover-to-redundant-network request message comprises information needed for accessing the redundant network; and
the accessing module is further configured to access the redundant network according to the information that is needed for accessing the redundant network and received by the receiving module.

14. A handover module, comprising:
a sending unit (11), configured to send a value of a periodic network detection timer to a terminal after the terminal is handed over from a home network to a redundant network (405, 710), wherein the value of the periodic network detection timer is determined by a subscription management device by acquiring a restoration time of the home network through a home network operator of the terminal and determining the value of the periodic network detection timer according to the restoration time, or the value of the periodic network detection timer is determined by the subscription management device by acquiring a handover time through a service provider of the terminal and determining the value of the periodic network detection timer according to the network handover time and sent to the handover module (708), for causing the terminal periodically to detect signal strength of the home network of the terminal according to the value of the periodic network detection timer (202);
a receiving unit (12), configured to receive a home network restoration report sent by the terminal when it accesses the home network again (711); and
an activating unit (13), configured to, according to the home network restoration report received by the receiving unit, disable an operational profile of the redundant network and enable an operational profile of the home network of the terminal (406).

15. The handover module according to claim 14, wherein the sending unit is further configured to send a handover-to-home-network success message to the subscription management device based on the home network restoration report received by the receiving unit.

## Patentansprüche

1. Netzwerkübergabeverfahren, umfassend:
nachdem ein Endgerät von einem Heimnetzwerk an ein redundantes Netzwerk übergeben ist, Empfangen, durch das Endgerät, eines Werts eines Zeitgebers für periodische Netzwerkerkennung, der von einem Übergabemodul (405, 710) gesendet wird,
wobei der Wert des Zeitgebers für periodische Netzwerkerkennung von einer Teilnahmeverwaltungsvorrichtung durch Erfassen einer Wiederherstellungszeit des Heimnetzwerks durch einen Heimnetzwerkbetreiber des Endgeräts und Bestimmen des Werts des Zeitgebers für periodische Netzwerkerkennung entsprechend der Wiederherstellungszeit bestimmt wird, oder der Wert des Zeitgebers für periodische Netzwerkerkennung von der Teilnahmeverwaltungsvorrichtung durch Erfassen einer Übergabezeit durch einen Dienstanbieter des Endgeräts und Bestimmen des Werts des Zeitgebers für periodische Netzwerkerkennung entsprechend der Netzwerkübergabezeit bestimmt wird und an das Übergabemodul gesendet wird (708);
periodisches Erkennen, durch das Endgerät, einer Signalstärke des Heimnetzwerks des Endgeräts entsprechend dem Wert des Zeitgebers für periodische Netzwerkerkennung (202);
wenn es erkannt ist, dass die Signalstärke des Heimnetzwerks des Endgeräts wiederhergestellt ist, Senden eines Heimnetzwerk-Wiederherstellungsberichts an das Übergabemodul, so dass das Übergabemodul ein Betriebsprofil des redundanten Netzwerks deaktiviert und ein Betriebsprofil des Heimnetzwerks des Endgeräts aktiviert (406, 711); und
Zugreifen, durch das Endgerät, auf das Heimnetzwerk (204).

2. Verfahren nach Anspruch 1, wobei nach dem Zugreifen, durch das Endgerät, auf das Heimnetzwerk, das Verfahren ferner Folgendes umfasst:
Senden, durch das Endgerät an das Übergabemodul, einer Übergabe-an-Heimnetzwerk-Erfolgsnachricht, so dass das Übergabemodul die Übergabe-an-Heimnetzwerk-Erfolgsnachricht an die Teilnahmeverwaltungsvorrichtung sendet.

3. Verfahren nach einem der Ansprüche 1 bis 2, wobei, bevor das Endgerät von dem Heimnetzwerk an das redundante Netzwerk übergeben wird, das Verfahren ferner Folgendes umfasst:
wenn das Endgerät nicht auf das Heimnetzwerk zugreifen kann, Erhalten, durch das Endgerät mittels Erkennen, eines Signals mindestens eines von anderen Netzwerken; und Senden, durch das Endgerät, einer Kennung eines erkannten anderen Netzwerks an das Übergabemodul, so dass auf einer Grundlage von Bestimmen, dass eine lokal voreingestellte Kennung des redundanten Netzwerks dieselbe wie die Kennung des anderen Netzwerks ist, das Übergabemodul das Betriebsprofil des Heimnetzwerks deaktiviert, das Betriebsprofil des redundanten Netzwerks des Endgeräts aktiviert und eine Übergabe-an-redundantes-Netzwerk-Anforderungsnachricht an das Endgerät sendet, wobei die Übergabe-an-redundantes-Netzwerk-Anforderungsnachricht Informationen umfasst, die zum Zugreifen auf das redundante Netzwerk benötigt werden; und dass das Endgerät von dem Heimnetzwerk an das redundante Netzwerk übergeben wird, im Speziellen Folgendes ist: dass das Endgerät entsprechend den Informationen, die zum Zugreifen auf das redundante Netzwerk benötigt werden, auf das redundante Netzwerk zugreift.

4. Netzwerkübergabeverfahren, umfassend:
nachdem ein Endgerät von einem Heimnetzwerk an ein redundantes Netzwerk übergeben ist, Senden, durch ein Übergabemodul, eines Werts eines Zeitgebers für periodische Netzwerkerkennung an das Endgerät (405, 710),
wobei der Wert des Zeitgebers für periodische Netzwerkerkennung von einer Teilnahmeverwaltungsvorrichtung durch Erfassen einer Wiederherstellungszeit des Heimnetzwerks durch einen Heimnetzwerkbetreiber des Endgeräts und Bestimmen des Werts des Zeitgebers für periodische Netzwerkerkennung entsprechend der Wiederherstellungszeit bestimmt wird, oder der Wert des Zeitgebers für periodische Netzwerkerkennung von der Teilnahmeverwaltungsvorrichtung durch Erfassen einer Übergabezeit durch einen Dienstanbieter des Endgeräts und Bestimmen des Werts des Zeitgebers für periodische Netzwerkerkennung entsprechend der Netzwerkübergabezeit bestimmt wird und an das Übergabemodul gesendet wird (708), so dass das Endgerät periodisch eine Signalstärke des Heimnetzwerks des Endgeräts entsprechend dem Wert des Zeitgebers für periodische Netzwerkerkennung erkennt (202); Empfangen, durch das Übergabemodul, eines Heimnetzwerk-Wiederherstellungsberichts, der von dem Endgerät gesendet wird, wenn es wieder auf das Heimnetzwerk zugreift (711); und
Deaktivieren (406), durch das Übergabemodul, eines Betriebsprofils des redundanten Netzwerks, und Aktivieren eines Betriebsprofils des Heimnetzwerks des Endgeräts.

5. Verfahren nach Anspruch 4, wobei nach dem Deaktivieren, durch das Übergabemodul, eines Betriebsprofils des redundanten Netzwerks und dem Aktivieren eines Betriebsprofils des Heimnetzwerks des Endgeräts das Verfahren ferner Folgendes umfasst: Senden, durch das Übergabemodul, einer Übergabe-an-Heimnetzwerk-Erfolgsnachricht an die Teilnahmeverwaltungsvorrichtung.

6. Verfahren nach einem der Ansprüche 4 bis 5, wobei, bevor das Endgerät von dem Heimnetzwerk an das redundante Netzwerk übergeben wird, das Verfahren ferner Folgendes umfasst:
Empfangen, durch das Übergabemodul, einer Kennung eines anderen Netzwerks, die von dem Endgerät gesendet wird, wobei das andere Netzwerk ein Netzwerk ist, das einem Signal eines anderen Netzwerks entspricht, das erkannt wird, wenn das Endgerät nicht auf das Heimnetzwerk zugreifen kann;
Bestimmen, durch das Übergabemodul, dass eine lokal voreingestellte Kennung eines redundanten Netzwerks dieselbe wie die Kennung des anderen Netzwerks ist;
Deaktivieren, durch das Übergabemodul, des Betriebsprofils des Heimnetzwerks des Endgeräts und Aktivieren des Betriebsprofils des redundanten Netzwerks; und
Senden, durch das Übergabemodul, einer Übergabe-an-redundantes-Netzwerk-Anforderungsnachricht an das Endgerät, wobei die Übergabe-an-redundantes-Netzwerk-Anforderungsnachricht Informationen umfasst, die zum Zugreifen auf das redundante Netzwerk benötigt werden, so dass das Endgerät entsprechend den Informationen, die zum Zugreifen auf das redundante Netzwerk benötigt werden, auf das redundante Netzwerk zugreift.

7. Verfahren nach Anspruch 6, wobei nach dem Senden, durch das Übergabemodul, einer Übergabe-an-redundantes-Netzwerk-Anforderungsnachricht an das Endgerät, wobei die Übergabe-an-redundantes-Netzwerk-Anforderungsnachricht Informationen umfasst, die zum Zugreifen auf das redundante Netzwerk benötigt werden, das Verfahren ferner Folgendes umfasst:
Senden, durch das Übergabemodul, eines Netzwerkübergabe-Ereignisberichts an die Teilnahmeverwaltungsvorrichtung, wobei der Netzwerkübergabe-Ereignisbericht eine Kennung des redundanten Netzwerks, eine Kennung des Endgeräts und einen Übergabegrund umfasst, so dass die Teilnahmeverwaltungsvorrichtung den Wert des Zeitgebers für periodische Netzwerkerkennung entsprechend der Richtlinie bestimmt und den bestimmten Wert des Zeitgebers für periodische Netzwerkerkennung an das Übergabemodul sendet.

8. Verfahren nach einem der Ansprüche 4 bis 7, wobei das Übergabemodul eine eingebettete "Universal Integrated Circuit Card" umfasst.

9. Netzwerkübergabeverfahren, umfassend:
nachdem ein Endgerät von einem Heimnetzwerk an ein redundantes Netzwerk übergeben ist (704), Bestimmen, durch eine Teilnahmeverwaltungsvorrichtung, eines Werts eines Zeitgebers für periodische Netzwerkerkennung durch Erfassen einer Wiederherstellungszeit des Heimnetzwerks durch einen Heimnetzwerkbetreiber des Endgeräts und Bestimmen des Werts des Zeitgebers für periodische Netzwerkerkennung entsprechend der Wiederherstellungszeit, oder Bestimmen, durch die Teilnahmeverwaltungsvorrichtung, des Werts des Zeitgebers für periodische Netzwerkerkennung durch Erfassen einer Übergabezeit durch einen Dienstanbieter des Endgeräts und Bestimmen des Werts des Zeitgebers für periodische Netzwerkerkennung entsprechend der Netzwerkübergabezeit (708); und
Senden, durch die Teilnahmeverwaltungsvorrichtung, des bestimmten Werts des Zeitgebers für periodische Netzwerkerkennung an das Übergabemodul (709), so dass das Übergabemodul den bestimmten Wert des Zeitgebers für periodische Netzwerkerkennung an das Endgerät sendet (710) und das Endgerät periodisch eine Signalstärke des Heimnetzwerks des Endgeräts erkennt (202) und auf einer Grundlage von Erkennen, dass die Signalstärke des Heimnetzwerks des Endgeräts wiederhergestellt ist, einen Heimnetzwerk-Wiederherstellungsbericht an das Übergabemodul sendet (406, 711) und auf das Heimnetzwerk zugreift (204).

10. Verfahren nach Anspruch 9, wobei vor dem Bestimmen, durch eine Teilnahmeverwaltungsvorrichtung, eines Werts eines Zeitgebers für periodische Netzwerkerkennung entsprechend einer Richtlinie, das Verfahren ferner Folgendes umfasst:
Empfangen, von der Teilnahmeverwaltungsvorrichtung, eines Netzwerkübergabe-Ereignisberichts, der von dem Übergabemodul gesendet wird, wobei der Netzwerkübergabe-Ereignisbericht eine Kennung des redundanten Netzwerks, eine Kennung des Endgeräts und einen Übergabegrund umfasst und der Netzwerkübergabe-Ereignisbericht ein Netzwerkübergabe-Ereignisbericht ist, der von dem Übergabemodul an die Teilnahmeverwaltungsvorrichtung gesendet wird, wobei, wenn das Endgerät nicht auf das Heimnetzwerk zugreifen kann, das Endgerät eine Kennung eines anderen Netzwerks, dessen Signal erkannt ist, an das Übergabemodul sendet, so dass auf einer Grundlage von Bestimmen, dass eine lokal voreingestellte Kennung des redundanten Netzwerks dieselbe wie die Kennung des anderen Netzwerks ist, und auf einer Grundlage von Zugreifen auf das redundante Netzwerk durch das Endgerät, nachdem eine Übergabe-an-redundantes-Netzwerk-Anforderungsnachricht an das Endgerät gesendet ist, das Übergabemodul den Netzwerkübergabe-Ereignisbericht an die Teilnahmeverwaltungsvorrichtung sendet.

11. Endgerät, umfassend:
ein Empfangsmodul (91),
das konfiguriert ist, nachdem ein Endgerät von einem Heimnetzwerk an ein redundantes Netzwerk übergeben ist (704), einen Wert eines Zeitgebers für periodische Netzwerkerkennung zu empfangen, der von einem Übergabemodul gesendet wird (405, 710), wobei der Wert des Zeitgebers für periodische Netzwerkerkennung von einer Teilnahmeverwaltungsvorrichtung durch Erfassen einer Wiederherstellungszeit des Heimnetzwerks durch einen Heimnetzwerkbetreiber des Endgeräts und Bestimmen des Werts des Zeitgebers für periodische Netzwerkerkennung entsprechend der Wiederherstellungszeit bestimmt wird, oder der Wert des Zeitgebers für periodische Netzwerkerkennung von der Teilnahmeverwaltungsvorrichtung durch Erfassen einer Übergabezeit durch einen Dienstanbieter des Endgeräts und Bestimmen des Werts des Zeitgebers für periodische Netzwerkerkennung entsprechend der Netzwerkübergabezeit bestimmt wird und an das Übergabemodul gesendet wird (708);
ein Erkennungsmodul (92),
das konfiguriert ist, periodisch eine Signalstärke des Heimnetzwerks des Endgeräts entsprechend dem Wert des Zeitgebers für periodische Netzwerkerkennung zu erkennen, der von dem Empfangsmodul empfangen wird (202);
ein Sendemodul (93),
das konfiguriert ist, auf einer Grundlage von Erkennen, durch das Erkennungsmodul, dass die Signalstärke des Heimnetzwerks des Endgeräts wiederhergestellt ist, einen Heimnetzwerk-Wiederherstellungsbericht an das Übergabemodul zu senden, zum Bewirken, dass das Übergabemodul ein Betriebsprofil des redundanten Netzwerks deaktiviert und ein Betriebsprofil des Heimnetzwerks des Endgeräts aktiviert (406, 711); und
ein Zugriffsmodul (94),
das konfiguriert ist, auf das Heimnetzwerk zuzugreifen, nachdem das Sendemodul den Heimnetzwerk-Wiederherstellungsbericht an das Übergabemodul sendet (204).

12. Endgerät nach Anspruch 11, wobei das Sendemodul ferner konfiguriert ist, an das Übergabemodul eine Übergabe-an-Heimnetzwerk-Erfolgsnachricht zu senden, so dass das Übergabemodul die Übergabe-an-Heimnetzwerk-Erfolgsnachricht an die Teilnahmeverwaltungsvorrichtung sendet.

13. Endgerät nach einem der Ansprüche 11 bis 12, wobei das Erkennungsmodul ferner konfiguriert ist, durch Erkennen ein Signal mindestens eines von anderen Netzwerken zu erhalten, wenn das Endgerät nicht auf das Heimnetzwerk zugreifen kann;
das Sendemodul ferner konfiguriert ist, eine Kennung des erkannten anderen Netzwerks an das Übergabemodul zu senden, so dass auf einer Grundlage von Bestimmen, dass eine lokal voreingestellte Kennung des redundanten Netzwerks dieselbe wie die Kennung des anderen Netzwerks ist, das Übergabemodul das Betriebsprofil des Heimnetzwerks deaktiviert, das Betriebsprofil des redundanten Netzwerks des Endgeräts aktiviert und eine Übergabe-an-redundantes-Netzwerk-Anforderungsnachricht an das Endgerät sendet, wobei die Übergabe-an-redundantes-Netzwerk-Anforderungsnachricht Informationen umfasst, die zum Zugreifen auf das redundante Netzwerk benötigt werden; und
das Zugriffsmodul ferner konfiguriert ist, auf das redundante Netzwerk entsprechend den Informationen zuzugreifen, die zum Zugreifen auf das redundante Netzwerk benötigt werden und von dem Empfangsmodul empfangen werden.

14. Übergabemodul, umfassend:
eine Sendeeinheit (11),
die konfiguriert ist, einen Wert eines Zeitgebers für periodische Netzwerkerkennung an ein Endgerät zu senden, nachdem das Endgerät von einem Heimnetzwerk an ein redundantes Netzwerk übergeben ist (405, 710), wobei der Wert des Zeitgebers für periodische Netzwerkerkennung von einer Teilnahmeverwaltungsvorrichtung durch Erfassen einer Wiederherstellungszeit des Heimnetzwerks durch einen Heimnetzwerkbetreiber des Endgeräts und Bestimmen des Werts des Zeitgebers für periodische Netzwerkerkennung entsprechend der Wiederherstellungszeit bestimmt wird, oder der Wert des Zeitgebers für periodische Netzwerkerkennung von der Teilnahmeverwaltungsvorrichtung durch Erfassen einer Übergabezeit durch einen Dienstanbieter des Endgeräts und Bestimmen des Werts des Zeitgebers für periodische Netzwerkerkennung entsprechend der Netzwerkübergabezeit bestimmt wird und an das Übergabemodul gesendet wird (708), zum Bewirken, dass das Endgerät periodisch eine Signalstärke des Heimnetzwerks des Endgeräts entsprechend dem Wert des Zeitgebers für periodische Netzwerkerkennung erkennt (202);
eine Empfangseinheit (12),
die konfiguriert ist, einen Heimnetzwerk-Wiederherstellungsbericht zu empfangen, der von dem Endgerät gesendet wird, wenn es wieder auf das Heimnetzwerk zugreift (711); und
eine Aktivierungseinheit (13),
die konfiguriert ist, entsprechend dem Heimnetzwerk-Wiederherstellungsbericht, der von der Empfangseinheit empfangen wird, ein Betriebsprofil des redundanten Netzwerks zu deaktivieren und ein Betriebsprofil des Heimnetzwerks des Endgeräts zu aktivieren (406).

15. Übergabemodul nach Anspruch 14, wobei die Sendeeinheit ferner konfiguriert ist, eine Übergabe-an-Heimnetzwerk-Erfolgsnachricht an die Teilnahmeverwaltungsvorrichtung auf Grundlage des Heimnetzwerk-Wiederherstellungsberichts zu senden, der von der Empfangseinheit empfangen wird.

## Revendications

1. Procédé de transfert de réseau, comprenant :
après le transfert d'un terminal d'un réseau de rattachement vers un réseau redondant, la réception par le terminal d'une valeur d'un temporisateur périodique de détection de réseau envoyée par un module de transfert (405, 710), la valeur du temporisateur périodique de détection de réseau étant déterminée par un dispositif de gestion d'abonnement par l'acquisition d'une durée de rétablissement du réseau de rattachement par l'intermédiaire d'un opérateur de réseau de rattachement du terminal, et la détermination de la valeur du temporisateur périodique de détection de réseau, en fonction de la durée de rétablissement, ou la valeur du temporisateur périodique de détection de réseau étant déterminée par le dispositif de gestion d'abonnement par l'acquisition d'un temps de transfert par l'intermédiaire d'un fournisseur de services du terminal et la détermination de la valeur du temporisateur périodique de détection de réseau en fonction du temps de transfert du réseau, et envoyée au module de transfert (708) ;
la détection périodique, par le terminal, de l'intensité du signal du réseau de rattachement du terminal en fonction de la valeur du temporisateur périodique de détection de réseau (202) ;
s'il est détecté que l'intensité du signal du réseau de rattachement du terminal est rétablie, l'envoi d'un rapport de rétablissement du réseau de rattachement au module de transfert, de sorte que le module de transfert désactive un profil opérationnel du réseau redondant et active un profil opérationnel du réseau de rattachement du terminal (406, 711) ; et
l'accès, par le terminal, au réseau de rattachement (204).

2. Procédé selon la revendication 1, après l'accès, par le terminal, au réseau de rattachement, le procédé comprenant en outre :
l'envoi, par le terminal au module de transfert, d'un message de succès de transfert vers le réseau de rattachement, de sorte que le module de transfert envoie le message de succès de transfert vers le réseau de rattachement au dispositif de gestion d'abonnement.

3. Procédé selon l'une quelconque des revendications 1 et 2, avant que le terminal ne soit transféré du réseau de rattachement au réseau redondant, le procédé comprenant en outre :
lorsque le terminal ne peut pas accéder au réseau de rattachement, l'obtention, par le terminal au moyen d'une détection, d'un signal d'au moins un des autres réseaux ; et
l'envoi, par le terminal, d'un identifiant d'un autre réseau détecté au module de transfert, de sorte que, sur la base de la détermination qu'un identifiant localement prédéfini du réseau redondant est identique à l'identifiant de l'autre réseau, le module de transfert désactive le profil opérationnel du réseau de rattachement, active le profil opérationnel du réseau redondant du terminal et envoie un message de demande de transfert vers un réseau redondant au terminal, le message de demande de transfert vers un réseau redondant comprenant les informations nécessaires pour accéder au réseau redondant ; et
le transfert du terminal du réseau de rattachement vers le réseau redondant étant spécifiquement tel que : le terminal accède au réseau redondant en fonction des informations nécessaires pour accéder au réseau redondant.

4. Procédé de transfert de réseau, comprenant :
après le transfert d'un terminal d'un réseau de rattachement vers un réseau redondant, l'envoi, par un module de transfert, d'une valeur d'un temporisateur périodique de détection de réseau au terminal (405, 710), la valeur du temporisateur périodique de détection de réseau étant déterminée par un dispositif de gestion d'abonnement par l'acquisition d'une durée de rétablissement du réseau de rattachement, par l'intermédiaire d'un opérateur de réseau de rattachement du terminal, et la détermination de la valeur du temporisateur périodique de détection de réseau, en fonction de la durée de rétablissement, ou la valeur du temporisateur périodique de détection de réseau étant déterminée par le dispositif de gestion d'abonnement par l'acquisition d'un temps de transfert par l'intermédiaire d'un fournisseur de services du terminal et la détermination de la valeur du temporisateur périodique de détection de réseau en fonction du temps de transfert du réseau, et envoyée au module de transfert (708),
de sorte que le terminal détecte périodiquement l'intensité du signal du réseau de rattachement du terminal en fonction de la valeur du temporisateur périodique de détection de réseau (202) ;
la réception, par le module de transfert, d'un rapport de rétablissement du réseau de rattachement envoyé par le terminal lorsqu'il accède de nouveau au réseau de rattachement (711) ; et
la désactivation (406), par le module de transfert, d'un profil opérationnel du réseau redondant, et
l'activation d'un profil opérationnel du réseau de rattachement du terminal.

5. Procédé selon la revendication 4, après la désactivation, par le module de transfert, d'un profil opérationnel du réseau redondant, et l'activation d'un profil opérationnel du réseau de rattachement du terminal, le procédé comprenant en outre :
l'envoi, par le module de transfert, d'un message de succès de transfert vers le réseau de rattachement au dispositif de gestion d'abonnement.

6. Procédé selon l'une quelconque des revendications 4 et 5, avant que le terminal ne soit transféré du réseau de rattachement au réseau redondant, le procédé comprenant en outre :
la réception, par le module de transfert, d'un identifiant d'un autre réseau envoyé par le terminal, l'autre réseau étant un réseau correspondant à un signal d'un autre réseau détecté lorsque le terminal ne peut pas accéder au réseau de rattachement ;
la détermination, par le module de transfert, qu'un identifiant localement prédéfini d'un réseau redondant est le même que l'identifiant d'un autre réseau ;
la désactivation, par le module de transfert, du profil opérationnel du réseau de rattachement du terminal et l'activation du profil opérationnel du réseau redondant ; et
l'envoi, par le module de transfert, d'un message de demande de transfert vers un réseau redondant au terminal, le message de demande de transfert vers un réseau redondant comprenant des informations nécessaires pour accéder au réseau redondant, de sorte que le terminal accède au réseau redondant en fonction des informations nécessaires pour accéder au réseau redondant.

7. Procédé selon la revendication 6, après l'envoi, par le module de transfert, d'un message de demande de transfert vers un réseau redondant au terminal, le message de demande de transfert vers un réseau redondant comprenant les informations nécessaires pour accéder au réseau redondant, le procédé comprenant en outre :
l'envoi, par le module de transfert, d'un rapport d'événement de transfert de réseau au dispositif de gestion d'abonnement, le rapport d'événement de transfert de réseau comprenant un identifiant du réseau redondant, un identifiant du terminal et un motif de transfert, de sorte que le dispositif de gestion d'abonnement détermine la valeur du temporisateur périodique de détection de réseau en fonction de la politique, et envoie la valeur du temporisateur périodique de détection de réseau déterminée au module de transfert.

8. Procédé selon l'une quelconque des revendications 4 à 7, le module de transfert comprenant une carte à circuit intégré universelle incorporée.

9. Procédé de transfert de réseau, comprenant :
après le transfert d'un terminal d'un réseau de rattachement vers un réseau redondant (704), la détermination, par un dispositif de gestion d'abonnement, d'une valeur d'un temporisateur périodique de détection de réseau par l'acquisition d'un temps de rétablissement du réseau de rattachement par l'intermédiaire d'un opérateur de réseau de rattachement du terminal, et la détermination de la valeur du temporisateur périodique de détection de réseau en fonction du temps de rétablissement ou la détermination, par le dispositif de gestion d'abonnement, de la valeur du temporisateur périodique de détection de réseau par l'acquisition d'un temps de transfert par l'intermédiaire d'un fournisseur de services du terminal et la détermination de la valeur du temporisateur périodique de détection de réseau en fonction du temps de transfert de réseau (708) ; et
l'envoi, par le dispositif de gestion d'abonnement, de la valeur du temporisateur périodique de détection de réseau déterminée au module de transfert (709), de sorte que le module de transfert envoie la valeur du temporisateur périodique de détection de réseau déterminée au terminal (710), et
le terminal détecte périodiquement l'intensité du signal du réseau de rattachement du terminal (202), et
sur la base de la détection que l'intensité du signal du réseau de rattachement du terminal est rétablie, envoie un rapport de rétablissement du réseau de rattachement au module de transfert (406, 711), et accède au réseau de rattachement (204).

10. Procédé selon la revendication 9, avant la détermination, par un dispositif de gestion d'abonnement, d'une valeur d'un temporisateur périodique de détection de réseau en fonction d'une politique, le procédé comprenant en outre :
la réception, par le dispositif de gestion d'abonnement, d'un rapport d'événement de transfert de réseau envoyé par le module de transfert, le rapport d'événement de transfert de réseau comprenant un identifiant du réseau redondant, un identifiant du terminal et un motif de transfert, et le rapport d'événement de transfert de réseau étant un rapport d'événement de transfert de réseau envoyé par le module de transfert au dispositif de gestion d'abonnement, lorsque le terminal ne peut pas accéder au réseau de rattachement, le terminal envoyant un identifiant d'un autre réseau dont le signal est détecté au module de transfert, de sorte que, sur la base de la détermination qu'un identifiant localement prédéfini du réseau redondant est le même que l'identifiant de l'autre réseau, et sur la base de l'accès au réseau redondant par le terminal après l'envoi au terminal d'un message de demande de transfert vers un réseau redondant, le module de transfert envoyant le rapport d'événement de transfert du réseau au dispositif de gestion d'abonnement.

11. Terminal, comprenant :
un module de réception (91), configuré pour, après le transfert d'un terminal d'un réseau de rattachement vers un réseau redondant (704),
recevoir une valeur d'un temporisateur périodique de détection de réseau qui est envoyée par un module de transfert (405, 710), la valeur du temporisateur périodique de détection de réseau étant déterminée par un dispositif de gestion d'abonnement par l'acquisition d'un temps de rétablissement du réseau de rattachement par l'intermédiaire d'un opérateur de réseau de rattachement du terminal et la détermination de la valeur du temporisateur périodique de détection de réseau en fonction du temps de rétablissement, ou la valeur du temporisateur périodique de détection de réseau étant déterminée par le dispositif de gestion d'abonnement par l'acquisition d'un temps de transfert par l'intermédiaire d'un fournisseur de services du terminal et la détermination de la valeur du temporisateur périodique de détection de réseau en fonction du temps de transfert du réseau, et envoyée au module de transfert (708) ;
un module de détection (92), configuré pour détecter périodiquement l'intensité du signal du réseau de rattachement du terminal en fonction de la valeur du temporisateur périodique de détection de réseau reçue par le module destinataire (202) ;
un module d'émission (93), configuré pour, sur la base de la détection, par le module de détection, que l'intensité du signal du réseau de rattachement du terminal est rétablie, envoyer un rapport de rétablissement du réseau de rattachement au module de transfert, pour amener le module de transfert à désactiver un profil opérationnel du réseau redondant, et à activer un profil opérationnel du réseau de rattachement du terminal (406, 711) ; et
un module d'accès (94), configuré pour accéder au réseau de rattachement après l'envoi par le module émetteur du rapport de rétablissement du réseau de rattachement au module de transfert (204).

12. Terminal selon la revendication 11, le module d'envoi étant en outre configuré pour envoyer au module de transfert un message de succès de transfert vers le réseau de rattachement, de sorte que le module de transfert envoie le message de succès de transfert vers le réseau de rattachement au dispositif de gestion d'abonnement.

13. Terminal selon l'une quelconque des revendications 11 et 12, le module de détection étant en outre configuré pour obtenir, par détection, un signal d'au moins un autre réseau lorsque le terminal ne peut pas accéder au réseau de rattachement ;
le module d'envoi étant en outre configuré pour envoyer un identifiant de l'autre réseau détecté au module de transfert, de sorte que, sur la base de la détermination qu'un identifiant localement prédéfini du réseau redondant est le même que l'identifiant de l'autre réseau, le module de transfert désactive le profil opérationnel du réseau de rattachement, active le profil opérationnel du réseau redondant du terminal et envoie un message de demande de transfert vers un réseau redondant, le message de demande de transfert vers un réseau redondant comprenant les informations nécessaires pour accéder au réseau redondant ; et
le module d'accès étant en outre configuré pour accéder au réseau redondant en fonction des informations qui sont nécessaires pour accéder au réseau redondant et reçues par le module de réception.

14. Module de transfert, comprenant :
une unité d'émission (11), configurée pour envoyer une valeur d'un temporisateur périodique de détection de réseau à un terminal après le transfert du terminal d'un réseau de rattachement vers un réseau redondant (405, 710) ;
la valeur du temporisateur périodique de détection de réseau étant déterminée par un dispositif de gestion d'abonnement par l'acquisition d'un temps de rétablissement du réseau de rattachement par l'intermédiaire d'un opérateur de réseau de rattachement du terminal et la détermination de la valeur du temporisateur périodique de détection de réseau en fonction du temps de rétablissement, ou la valeur du temporisateur périodique de détection de réseau étant déterminée par le dispositif de gestion d'abonnement par l'acquisition d'un temps de transfert par l'intermédiaire d'un fournisseur de services du terminal et la détermination de la valeur du temporisateur périodique de détection de réseau en fonction du temps de transfert du réseau et envoyée au module de transfert (708), pour amener le terminal à détecter périodiquement la force du signal du réseau de rattachement du terminal en fonction de la valeur du temporisateur périodique de détection de réseau (202) ;
une unité de réception (12) configurée pour recevoir un rapport de rétablissement de réseau de rattachement envoyé par le terminal lorsqu'il accède de nouveau au réseau de rattachement (711) ; et
une unité d'activation (13), configurée pour, en fonction du rapport de rétablissement du réseau de rattachement reçu par l'unité de réception, désactiver un profil opérationnel du réseau redondant et activer un profil opérationnel du réseau de rattachement du terminal (406).

15. Module de transfert selon la revendication 14, l'unité émettrice étant en outre configurée pour envoyer un message de succès de transfert vers le réseau de rattachement au dispositif de gestion d'abonnement sur la base du rapport de rétablissement du réseau de rattachement reçu par l'unité destinataire.
